# EUROPÄISCHE PATENTSCHRIFT

(11) **EP 1 913 007 B1**
(45) Veröffentlichungstag und Bekanntmachung des Hinweises auf die Patenterteilung: **22.06.2011**
(21) Anmeldenummer: 06778006.4
(22) Anmeldetag: 26.07.2006
(51) Int. Cl.: C07F 9/50

(54) **VERFAHREN ZUR HERSTELLUNG OPTISCH AKTIVER DIPHOSPHANE**
PROCESS FOR PREPARING OPTICALLY ACTIVE DIPHOSPHANES
PROCEDE DE PRODUCTION DE DIPHOSPHANES OPTIQUEMENT ACTIFS

(30) Priorität: 29.07.2005 DE 102005036340
(43) Veröffentlichungstag der Anmeldung: 23.04.2008
(73) Patentinhaber: BASF SE, 67056 Ludwigshafen (DE)
(72) Erfinder: JÄKEL, Christoph, 67117 Limburgerhof (DE); PACIELLO, Rocco, 67098 Bad Dürkheim (DE)
(86) Internationale Anmeldenummer: PCT/EP2006/064709
(87) Internationale Veröffentlichungsnummer: WO 2007/012655

(56) Entgegenhaltungen:
- MATTEOLI U ET AL: "Synthesis of the chiral diphosphine ligand 2,3-bis(diphenylphosphino) butane (CHIRAPHOS)" TETRAHEDRON: ASYMMETRY, ELSEVIER SCIENCE PUBLISHERS, AMSTERDAM, NL, Bd. 8, Nr. 9, 8. Mai 1997 (1997-05-08), Seiten 1403-1409, XP004064102 ISSN: 0957-4166 in der Anmeldung erwähnt
- WIFE ET AL: "Phosphine Oxide Anions in the Synthesis of Phosphine Ligands" SYNTHESIS, 1983, Seiten 71-73, XP002407158
- CHAPUIS ET AL: "Synthesis of Citronellal by Rh(I)-Catalysed Asymmetric Isomerization of N,N-Diethyl-Substituted Geranyl- and Nerylamines or Geraniol and Nerol in the Presence of Chiral Diphosphino Ligands, under Homogeneous and Supported Conditions" HELVETICA CHIMICA ACTA, Bd. 84, 2001, Seiten 230-242, XP002407159
- MAIER: HELV. CHIM. ACTA, 1968, pages 405-413,
- MAIER: HELV. CHIM. ACTA, 1968, Seiten 405-413,

## Beschreibung

### Technisches Gebiet der Erfindung

Die vorliegende Erfindung betrifft ein Verfahren zur Herstellung optisch aktiver Bis-Phosphinylalkane ausgehend von den entsprechend substituierten, racemischen 1,2-Diolen. Die so zugänglichen optisch aktiven Bis-Phosphinylalkane eignen sich als Liganden zur Herstellung chiraler Übergangsmetallkatalysatoren.

Die Verwendung chiraler Bis-Phosphinylalkane zur Herstellung chiraler Übergangsmetallkatalysatoren ist wohlbekannt. Als für viele Anwendungen besonders leistungsfähiger Katalysator hat sich die Kombination eines Rh-Komplexes mit einem chiralen Bisphosphan wie z.B. (R,R)-2,3-Bisdiphenylphosphinobutan ("(R,R)-Chiraphos") erwiesen. Dieser Ligand sowie ein Verfahren zu dessen Herstellung wurde bereits 1977 vorbeschrieben (Bosnich et al. J. Am. Chem. Soc. 1977, 99, 6262-6267). Im Laufe der Jahre sind weitere Methoden zu Herstellung dieses Liganden beschrieben worden (Jansen et al. Tetrahedron:Asymmetry 1990, 1, 719-720; Matteoli et al. Tetrahedron:Asymmetry 1997, 8, 1403-1410). Herstellmethoden ähnlicher Liganden wurden ebenfalls beschrieben (Chem. Ber. 1986, 119, 3326; Tetrahedron:Asymmetry 1990, 1, 895-912; Chem. Pharm. Bull. 1990, 38, 818; Synthesis 1992, 951; J. Organomet. Chem. 1998, 560, 257; EP1182205).

Die bisher beschriebenen Methoden/Verfahren zur Herstellung von (R,R)-Chiraphos sowie dessen Analoga eignen sich nicht für eine wirtschaftlich vorteilhafte Anwendung im technischen Maßstab.

### Stand der Technik

Die DE-A 100 33 956 offenbart ein Verfahren zur Herstellung von symmetrischen und unsymmetrischen Bisphosphino-Verbindungen durch Umsetzung eines cyclischen Alkylensulfats mit einer Phosphor(III)-Alkaliverbindung.

R.L. Wife et al beschreiben in J. Chem. Soc., Chem. Comm., 1983, 805 - 805 die Synthese von 1,2-Ethylen-bis(diarylphosphinoxiden) durch Umsetzung von Diarylphosphinoxid-anionen mit geeigneten Oxiranen. Dabei findet eine sequentielle Ringöffnung und Substitution statt.

Das entsprechende Verfahren, das dadurch gekennzeichnet ist, dass man es in einem polaren aprotischen Lösungsmittel und in Gegenwart einer basischen Verbindung durchführt, welche zur Bildung eines Phosphinoylanions befähigt ist, offenbart die EP-A 0 111 950.

Die EP-A 0 807 636 offenbart spezielle Diphosphine, die als Ammoniumcarboxylate, -sulfonate oder -phosphonate mit ein- bzw. mehrfach geladenem Diphosphin-Anion und der korrespondierenden Anzahl Ammonium-Kationen als Gegenionen vorliegen. Darüber hinaus wird auch ein Verfahren zur Herstellung dieser Verbindungen offenbart, bei dem Diphenylphosphinoxid in Gegenwart einer Base mit einem entsprechenden Dihalogenid umgesetzt wird.

Die DE 196 09 336 betrifft spezielle Bis(diarylphoshine), die Aminsubstituierte Arylreste aufweisen und in kationischer Form mit einem Gegenion vorliegen können sowie ein Verfahren zu deren Herstellung, bei dem die einzelnen Phosphanliganden nacheinander durch Substitution mit einem geeigneten Dihalogenid verknüpft werden.

Synthesis 1983, 71-73 beschreibt ein Herstellverfahren für 1,2-di-substituierte Diphosphanoethane ausgehend von Diarylphosphinoxiden durch Reaction mit Ditosylat und nachfolgender Reduktion. Dabei wird keine racemische Auflösung erreicht. Auch nicht offenbart werden Übergangsmetallkomplex-Katalysatoren enthaltend Chiraphos oder ein Herstellprozess für Citronellal.

Helvetica Chimica Acta 2001, vol 84, 230-242 offenbart ein Herstellverfahren für Citronellal durch Hydrierung von Geranial oder Neral mittels (R,R)-Ghiraphos und [Rh₄(CO)₁₂]. Chiraphos wurde dabei durch ein von der vorliegenden Erfindung abweichendem Verfahren hergestellt. Eine Mischung von Geranial und Neral wurde ebenfalls nicht eingesetzt.

### Aufgabe der Erfindung

Der vorliegenden Erfindung lag die Aufgabe zu Grunde ein Verfahren zur Herstellung optisch aktiver vicinaler Bis-Phosphinylalkane bereitzustellen, das sich durch eine geringe Gesamtstufenzahl ausgehend von wohlfeilen, gut zugänglichen Edukten in hohen Ausbeuten durchführen lässt und für Umsetzungen im technischen Maßstab geeignet ist.

### Beschreibung der Erfindung sowie der bevorzugten Ausführungsformen

Die Aufgabe wurde erfindungsgemäß gelöst durch die Bereitstellung eines Verfahrens zur Herstellung von optisch aktiven Bis-phosphinylalkanen der Formel (I) 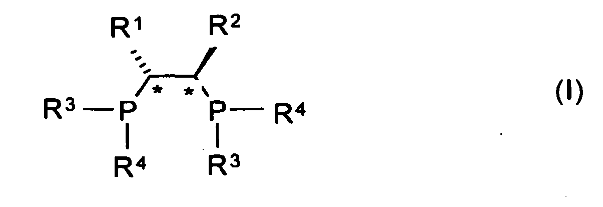 wobei die Reste
- R¹ und R²: gleich oder verschieden sein können und jeweils einen gerad- kettigen, verzweigten oder cyclischen Alkylrest mit 1 bis 12 Kohlenstoffatomen, der einen oder mehrere gleiche oder ver- schiedene Substituenten, ausgewählt aus der Gruppe der Sub- stituenten Halogen, C₆- bis C₁₂-Aryl, NR⁵R⁶, NHR⁷ und OR⁸ aufweisen kann, oder einen Arylrest mit 6 bis 12 Kohlenstoff- atomen, der einen oder mehrere gleiche oder verschieden Sub- stituenten, ausgewählt aus der Gruppe der Substituenten C₁- bis C₁₂-Alkyl, Halogen, C₆- bis C₁₂-Aryl, NR^{5'}R^{6'}, NHR^{7'} und OR^{8'} aufweisen kann, bedeuten oder gemeinsam einen aliphatischen Cyclus oder Bicyclus mit 4 bis 12 Ringgliedern bilden können, der einen oder mehrere Substituenten, ausgewählt aus der Gruppe der Substituenten Halogen, Oxo, C₆- bis C₁₂-Aryl, C₁- bis C₁₀-Acyl und C₁- bis C₁₀-Sulfonyl aufweisen kann und der eines oder mehrere Heteroatome O oder NR⁹ umfassen kann, und
- R³ und R⁴: gleich oder verschieden sein können und jeweils einen gerad- kettigen, verzweigten oder cyclischen Alkylrest mit 1 bis 12 Kohlenstoffatomen oder einen Arylrest mit 6 bis 12 Kohlenstoff- atomen bedeuten, die jeweils einen oder mehrere gleiche oder verschieden Substituenten, ausgewählt aus der Gruppe der Substituenten C₁- bis C₁₂-Alkyl, Halogen, NR^{5"}R^{6"}, NHR^{7"}, OR^{8"}, Sulphonyl und NR¹⁰R¹¹R¹²R¹³, C(O)OR¹⁴, C(O)NR^{14'}R^{14"} und wobei die Reste
- R⁵, R⁶ bis R^{5"}, R^{6"}: jeweils unabhängig voneinander C₁- bis C₁₂-Alkyl oder C₆-bis C₁₂-Aryl,
- R⁷ bis R^{7"}: C₁- bis C₁₀- Acyl oder C₁-C₁₀-Sulfonyl,
- R⁸ bis R^{8"}: C₁- bis C₁₂-Alkyl oder C₆-bis C₁₂-Aryl,
- R⁹: C₁- bis C₁₂-Alkyl, C₆-bis C₁₂-Aryl, C₁- bis C₁₀-Acyl oder C₁- bis C₁₀- Sulfonyl,
- R¹⁰ bis R¹³: unabhängig voneinander C₁-C₁₂-Alkyl, C₆-C₁₂-Aryl oder C₇-C₁₇ Aralkyl,
- R¹⁴, R¹⁴': Wasserstoff, C₁-C₁₂-Alkyl, C₆-C₁₂-Aryl oder C₇-C₁₇ Aralkyl,
- R^{14"}: C₁-C₁₂-Alkyl, C₆-C₁₂-Aryl oder C₇-C₁₇ Aralkyl,
bedeuten können, und wobei
- *: ein asymmetrisch substituiertes Kohlenstoffatom bezeichnet,
umfassend die folgenden Reaktionsschritte a) bis d):
a) Umsetzung eines Diols der Formel (II) 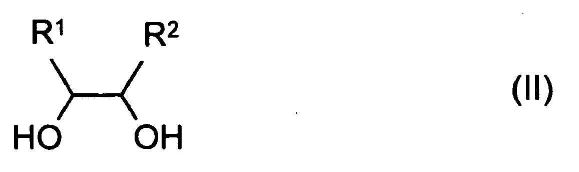 wobei die Reste R¹ und R² die gleiche Bedeutung wie in Formel (I) besitzen, zu einer Verbindung der Formel (III) 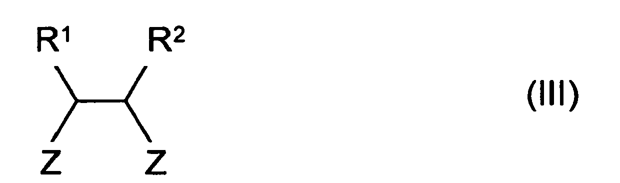 wobei die Reste R¹ und R² die gleiche Bedeutung wie in Formel (I) besitzen, und die Reste
   - Z: jeweils für eine Abgangsgruppe stehen oder gemeinsam für ein Struktur- fragment ausgewählt aus der Gruppe der Strukturfragmente -O-S(O)₂-O-, - O-P(O)(OR¹⁵)₂-O-, -O-C(O)-O- und -O-C(O)-C(O)-O- stehen, wobei R¹⁵ für C₁- bis C₁₂-Alkyl, C₇- bis C₁₇-Aralkyl oder C₆- bis C₁₂-Aryl stehen kann,
b) Umsetzung der in Schritt a) erhaltenen Verbindung der Formel (III) mit einem Phosphit der Formel (IV) 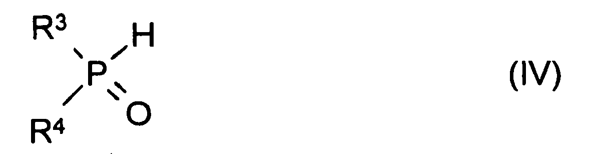 wobei die Reste R³ und R⁴ die gleiche Bedeutung wie in Formel (I) besitzen,
   in Gegenwart einer Base, die befähigt ist, das eingesetzte Phosphit der Formel (IV) zu deprotonieren,
   zu einem racemischen, 1,2-trans-konfigurierten Diphosphit der Formel (V) 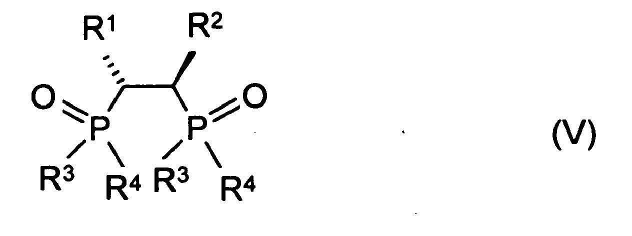 wobei die Reste R¹ bis R⁴ die gleiche Bedeutung wie in Formel (I) besitzen,
c) Racematspaltung des in Schritt b) erhaltenen racemischen Diphosphits der Formel (V) unter Erhalt eines optisch aktiven Diphosphits der Formel (V*) 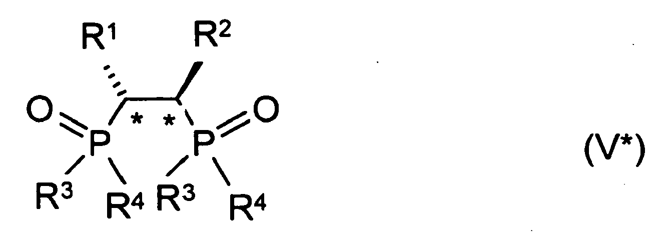 wobei die Reste R¹ bis R⁴ die für Formel (I) angegebene Bedeutung besitzen, und
   * ein asymmetrisch substituiertes Kohlenstoffatom bezeichnet, und
d) Reduktion der in Schritt c) erhaltenen Verbindung der Formel (V*) zur Verbindung der Formel (I).

Das erfindungsgemäße Verfahren eignet sich zur Herstellung von optisch aktiven Bis-phosphinylalkanen der Formel (I), wobei den Resten R¹ bis R⁴ sowie den Substituenten R⁵ bis R¹⁵ die vorstehend genannten Bedeutungen zukommen. Die für die Reste R¹ bis R⁴ jeweils genannte Anzahl von Kohlenstoffatomen umfasst dabei nicht die der jeweils mit den Resten verknüpften Substituenten. Für die genannten Substituenten seien beispielhaft die folgenden, Bedeutungen angegeben:

C₁- bis C₆-Alkyl steht beispielsweise für Methyl, Ethyl, Propyl, 1-Methylethyl, Butyl, 1-Methyl-propyl, 2-Methylpropyl, 1,1-Dimethylethyl, Pentyl, 1-Methylbutyl, 2-Methylbutyl, 3-Methylbutyl, 2,2-Di-methylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl oder 1-Ethyl-2-methylpropyl.

C₁- bis C₁₂-Alkyl bedeutet beispielsweise wie vorstehend genanntes C₁- bis C₆-Alkyl und darüber hinaus Heptyl, 2-Methylhexyl, 3-Methylhexyl, 3-Ethylhexyl, 2,2-Dimethylpentyl, 3,3-Dimethylpentyl, 2,3-Dimethylpentyl, 2,4-Dimethylpentyl, 2,2,3-Trimethylbutyl, Octyl, 2-Methylheptyl, 3-Methylheptyl,4-Methylheptyl, 3-Ethylhexyl, 4-Ethylhexyl, 2,2-Dimethylhexyl, 3,3-Dimethylhexyl, 2,3-Dimethylhexyl, 2,4-Dimethylhexyl, 2,5-Dimethylhexyl, 3,4-Dimethylhexyl, 3,5-Dimethylhexyl, 2,3,4-Trimethylpentyl, 2,2,3-Trimethylpentyl, 2,2,4-Trimethylpentyl, 2,3,3-Trimethylpentyl, 3-Ethyl-2-Methylpentyl, 3-Ethyl-3-Methylpentyl, 2,2,3,3-Tetramethybutyl, Nonyl, 2-Methyloctyl, 3-Methyloctyl,4-Methyloctyl, 3-Ethylheptyl, 4-Ethylheptyl, 2,2-Dimethylheptyl, 3,3-Dimethylheptyl, 4,4-Dimethylheptyl, 2,3-Dimethylheptyl, 2,4-Dimethylheptyl, 2,5-Dimethylheptyl, 2,6-Dimethylheptyl, 3,4-Dimethylheptyl, 3,5-Dimethylheptyl, 3,6-Dimethylheptyl, 2,3,4-Trimethyl hexyl, 2,2,3-Trimethylhexyl, 2,2,4-Trimethylhexyl, 2,2,5-Trimethylhexyl, 2,3,3-Trimethylhexyl, 3,3,4-Trimethylhexyl, 3,3,5-Trimethylhexyl, 3-Ethyl-2-Methylhexyl, 3-Ethyl-3-Methylhexyl, 3-Ethyl-4-Methylhexyl, 3-Ethyl-5-Methylhexyl, 2,2,3,3-Tetramethylpentyl, 2,2,4,4-Tetramethylpentyl, 2,2,3,4-Tetramethylpentyl, 2,3,3,4-Tetramethylpentyl, 3,3-Tetraethylpentyl, Decyl, 2-Methylnonyl, 3-Methylnonyl,4-Methylnonyl, 5-Methylnonyl, 3-Ethyloctyl, 4-Ethyloctyl, 5-Ethyloctyl, 2,2-Dimethyloctyl, 3,3-Dimethyloctyl, 4,4-Dimethyloctyl, 5,5-Dimethyloctyl, 2,3-Dimethyloctyl, 2,4-Dimethyloctyl, 2,5-Dimethyloctyl, 2,6-Dimethyloctyl, 2,7-Dimethyloctyl, 3,4-Dimethyloctyl, 3,5-Dimethyloctyl, 3,6-Dimethyloctyl, 4,5-Dimethyloctyl, 2,3,4-Trimethylheptyl, 2,2,3-Trimethylheptyl, 2,2,4-Trimethylheptyl, 2,2,5-Trimethylheptyl, 2,3,3-Trimethylheptyl, 3,3,4-Trimethylheptyl, 3,3,5-Trimethylheptyl, 3-Ethyl-2-Methylheptyl, 3-Ethyl-3-Methylheptyl, 3-Ethyl-4-Methylheptyl, 3-Ethyl-5-Methylheptyl, 2,2,3,3-Tetramethylhexyl, 2,2,4,4-Tetramethylhexyl, 2,2,3,4-Tetramethylhexyl, 2,3,3,4-Tetramethylhexyl, 3,3-Tetraethylhexyl, Undecyl, 2-Methyldecyl, 3-Methyldecyl,4-Methyldecyl, 5-Methyldecyl, 3-Ethylnonyl, 4-Ethylnonyl, 5-Ethylnonyl, 2,2-Dimethylnonyl, 3,3-Dimethylnonyl, 4,4-Dimethylnonyl, 5,5-Dimethylnonyl, 2,3-Dimethylnonyl, 2,4-Dimethylnonyl, 2,5-Dimethylnonyl, 2,6-Dimethylnonyl, 2,7-Dimethylnonyl, 3,4-Dimethylnonyl, 3,5-Dimethylnonyl, 3,6-Dimethylnonyl, 4,5-Dimethylnonyl, 2,3,4-Trimethyloctyl, 2,2,3-Trimethyloctyl, 2,2,4-Trimethyloctyl, 2,2,5-Trimethyloctyl, 2,3,3-Trimethyloctyl, 3,3,4-Trimethyloctyl, 3,3,5-Trimethyloctyl, 3-Ethyl-2-Methyloctyl, 3-Ethyl-3-Methyloctyl, 3-Ethyl-4-Methyloctyl, 3-Ethyl-5-Methyloctyl, 2,2,3,3-Tetramethylheptyl, 2,2,4,4-Tetramethylheptyl, 2,2,3,4-Tetramethylheptyl, 2,3,3,4-Tetramethylheptyl, 3,3-Tetraethylheptyl, Dodecyl, 2-Methylundecyl, 3-Methylundecyl,4-Methylundecyl, 5-Methylundecyl, 3-Ethyldecyl, 4-Ethyldecyl, 5-Ethyldecyl, 2,2-Dimethyldecyl, 3,3-Dimethyldecyl, 4,4-Dimethyldecyl, 5,5-Dimethyldecyl, 2,3-Dimethyldecyl, 2,4-Dimethyldecyl, 2,5-Dimethyldecyl, 2,6-Dimethyldecyl, 2,7-Dimethyldecyl, 3,4-Dimethyldecyl, 3,5-Dimethyldecyl, 3,6-Dimethyldecyl, 4,5-Dimethyldecyl, 2,3,4-Trimethylnonyl, 2,2,3-Trimethylnonyl, 2,2,4-Trimethylnonyl, 2,2,5-Trimethylnonyl, 2,3,3-Trimethylnonyl, 3,3,4-Trimethylnonyl, 3,3,5-Trimethylnonyl, 3-Ethyl-2-Methylnonyl, 3-Ethyl-3-Methylnonyl, 3-Ethyl-4-Methylnonyl, 3-Ethyl-5-Methylnonyl, 2,2,3,3-Tetramethyloctyl, 2,2,4,4-Tetramethyloctyl, 2,2,3,4-Tetramethyloctyl, 2,3,3,4-Tetramethyloctyl, 3,3-Tetraethyloctyl.

Darüber hinaus bedeutet im Rahmen der vorliegenden Erfindung Halogen Fluor, Chlor, Brom oder Jod, bevorzugt Chlor, Brom oder Iod.

C₆- bis C₁₂-Aryl steht beispielsweise für Phenyl, 1-Methylphenyl, 2-Methylphenyl, 3-Methylphenyl, 1-Ethylphenyl, 2-Ethylphenyl, 3-Ethylphenyl, 1-Propylphenyl, 2-Propylphenyl, 3-Propylphenyl, 1-iso-Propylphenyl, 2-iso-Propylphenyl, 3-iso-Propylphenyl, 1-Butylphenyl, 2-Butylphenyl, 3-Butylphenyl, 1-iso-Butylphenyl, 2-iso-Butylphenyl, 3-iso-Butylphenyl, 1-sec-Butylphenyl, 2-sec-Butylphenyl, 3-sec-Butylphenyl, 1-tert-Butylphenyl, 2-tert-Butylphenyl, 3-tert-Butylphenyl, 1-(1-pentenyl)phenyl, 2-(1-pentenyl)phenyl, 3-(1-pentenyl)phenyl, 1-(2-pentenyl)phenyl, 2-(2-pentenyl)phenyl, 3-(2-pentenyl)phenyl, 1-(3-pentenyl)phenyl, 2-(3-pentenyl)phenyl, 3-(3-pentenyl)phenyl, 1-(1-(2-methylbutyl))phenyl, 2-(1-(2-methylbutyl))phenyl, 3-(1-(2-methylbutyl))phenyl, 1-(2-(2-methylbutyl))phenyl, 2-(2-(2-methylbutyl))phenyl, 3-(2-(2-methylbutyl))phenyl, 1-(3-(2-methylbutyl))phenyl, 2-(3-(2-methylbutyl))phenyl, 3-(3-(2-methylbutyl))phenyl, 1-(4-(2-methylbutyl))phenyl, 2-(4-(2-methylbutyl))phenyl, 3-(4-(2-methylbutyl))phenyl, 1-(1-(2,2-Dimethylpropyl))phenyl, 2-(1-(2,2-Dimethylpropyl)-)phenyl, 3-(1-(2,2-Dimethylpropyl))phenyl, 1-(1-hexenyl)phenyl, 2-(1-hexenyl)phenyl, 3-(1-hexenyl)phenyl, 1-(2-hexenyl)phenyl, 2-(2-hexenyl)phenyl, 3-(2-hexenyl)phenyl, 1-(3-hexenyl)phenyl, 2-(3-hexenyl)phenyl, 3-(3-hexenyl)phenyl, 1-(1-(2-Methylpentenyl))phenyl, 2-(1-(2-Methylpentenyl))phenyl, 3-(1-(2-Methylpentenyl))phenyl, 1-(2-(2-Methylpentenyl))phenyl, 2-(2-(2-Methylpentenyl))phenyl, 3-(2-(2-Methylpentenyl))phenyl, 1-(3-(2-Methylpentenyl))phenyl, 2-(3-(2-Methylpentenyl))phenyl, 3-(3-(2-Methylpentenyl))phenyl, 1-(4-(2-Methylpentenyl))phenyl, 2-(4-(2-Methylpentenyl))phenyl, 3-(4-(2-Methylpentenyl))phenyl, 1-(5-(2-Methylpentenyl))phenyl, 2-(5-(2-Methylpentenyl))phenyl, 3-(5-(2-Methylpentenyl))phenyl, 1-(1-(2,2-Dimethylbutenyl))phenyl, 2-(1-(2,2-Dimethylbutenyl))phenyl, 3-(1-(2,2-Dimethylbutenyl))phenyl, 1-(3-(2,2-Dimethylbutenyl))phenyl, 2-(3-(2,2-Dimethylbutenyl))phenyl, 3-(3-(2,2-Dimethylbutenyl))phenyl, 1-(4-(2,2-Dimethylbutenyl))phenyl, 2-(4-(2,2-Dimethylbutenyl))phenyl, 3-(4-(2,2-Dimethylbutenyl))phenyl oder Naphtyl.

C₁- bis C₁₀-Acyl steht für einen geradkettigen, verzweigten oder cyclischen Acylrest mit 1 bis 10 Kohlenstoffatomen wie beispielsweise: Formyl, Acetyl, Propionyl, Butanoyl, Pentanoyl, Hexanoyl, Heptanoyl, Octanoyl, Nonaoyl, Decanoyl, Pivaloyl, 1-Cyclohexylformyl, Phthaloyl, Alkyloxycarbonyl, wie z. B. Methyloxycarbonyl, Ethyloxycarbonyl, Propyloxycarbonyl, Butyloxycarbonyl, Pentyloxycarbonyl, Hexyloxycarbonyl, Heptyloxycarbonyl, Octyloxycarbonyl, Nonyloxycarbonyl, tert.-Butyloxycarbonyl, Benzyloxycarbonyl oder Alkylamidocarbonyl, wie z. B. N,N-Dimethylamidocarbonyl.

C₁- bis C₁₀-Sulphonyl steht im Rahmen der vorliegenden Erfindung für einen Sulphonylrest mit 1 bis 10 Kohlenstoffatomen wie beispielsweise Methylsulphonyl, Ethylsulphonyl, Propylsulphonyl, Butylsulphonyl, Pentylsulphonyl, Hexylsulphonyl, Heptylsulphonyl, Octylsulphonyl, Nonylsulphonyl, Decylsulphonyl, Phenylsulphonyl, (3-Brom)phenylsulphonyl, (3-Methyl)phenylsulphonyl oder Trifluormethylsulphonyl.

C₇-C₁₇ Aralkyl steht im Rahmen der vorliegenden Erfindung beispielsweise für Phenylmethyl, 1-Phenylethyl, 2-Phenylethyl, 1-Phenylpropyl, 2-Phenylpropyl, 3-Phenylpropyl, 1-Phenylbutyl, 2-Phenylbutyl, 3-Phenylbutyl, 4-Phenylbutyl, 1-Phenylpentyl, 2-Phenylpentyl, 3-Phenylpentyl, 4-Phenylpentyl, 5-Phenylpentyl, 6-Phenylhexyl, 7-Phenylheptyl, 8-Phenyloctyl, 9-Phenylnonyl, 10-Phenyldecyl, 11-Phenylundecyl, Methyl(1-naphthyl), Methyl(2-naphthyl), 2-Ethyl(1-naphthyl), 2-Ethyl(2-naphthyl), 3-Propyl(1-naphthyl), 3-Propyl(2-naphthyl), 4-Butyl(1-naphthyl), 4-Butyl(2-naphthyl), 5-Pentyl(1-naphthyl), 5-Pentyl(2-naphthyl), 6-Hexyl(1-naphthyl), 6-Hexyl(2-naphthyl), 7-Heptyl(1-naphthyl), 7-Heptyl(2-naphthyl), Methyl(1-biphenyl), Methyl(2-biphenyl), Methyl(3-biphenyl), 2-Ethyl(1-biphenyl), 2-Ethyl(2-biphenyl), 2-Ethyl(3-biphenyl), 3-Propyl(1-biphenyl), 3-Propyl(2-biphenyl), 3-Propyl(3-biphenyl), 4-Butyl(1-biphenyl), 4-Butyl(2-biphenyl), 4-Butyl(3-biphenyl), 5-Pentyl(1-biphenyl), 5-Pentyl(2-biphenyl), 5-Pentyl(3-biphenyl), 6-Hexyl(1-biphenyl), 6-Hexyl(2-biphenyl), 6-Hexyl(3-biphenyl), 7-Heptyl(1-biphenyl), 7-Heptyl(2-biphenyl), 7-Heptyl(3-biphenyl) oder Methylanthracenyl.

Für die genannten Substituenten seien beispielhaft die folgenden bevorzugten Bedeutungen angegeben:
NR⁵R⁶ wie z.B. Dimethylamino, Diethylamino, Dipropylamino, Dibutylamino, Diphenylamino, Di(3-Methoxyphenyl)amino, Di(3-Bromphenyl)amino, Dibenzylamino, Di(3-Methoxyphenyl)amino, Di(3'-Bromphenylmethyl)amino oder Phthaloylamino,
NHR⁷ wie z.B. Acetylamino, Propanoylamino, Butanoylamino, Pivaloylamino, Tosyl oder Methansulphonylamino,
OR⁸ wie z.B. Methoxy, Ethoxy, iso-Propoxy, tert-Butoxy oder Benzyloxy,
NR⁹ wie z.B. Phenylamino, Acetylamino, Methylsulfonylamino, und Toluensulphonylamino und
NR¹⁰R¹¹R¹²R¹³ wie z.B. Tetramethylammonium, Tetraethylammonium, Benzyltrimethylammonium oder Benzyl-triethylammonium.

Das Zeichen (*) bezeichnet ein asymmetrisch substituiertes Kohlenstoffatom, das heißt ein tetraedrisches Kohlenstoffatom mit vier verschiedenen Resten, das zum überwiegenden Teil in einer seiner beiden möglichen spiegelbildlichen Formen vorliegt.

Bevorzugt eignet sich das erfindungsgemäße Verfahren zur Herstellung von optisch aktiven Bis-phosphinylalkanen der Formel (I), bei denen die Reste R¹ und R² gleich oder verschieden, bevorzugt gleich sind und jeweils einen geradkettigen, verzweigten oder cyclischen Alkylrest mit 1 bis 12, bevorzugt 1 bis 6 Kohlenstoffatomen bedeuten und gemeinsam einen aliphatischen Cyclus oder Bicyclus mit 4 bis 12 Ringgliedern bilden können, der einen oder mehrere, in der Regel 1 bis etwa 3, Substituenten, ausgewählt aus der Gruppe der Substituenten Halogen, C₆- bis C₁₀-Aryl C₁- bis C₁₀-Acyl und Ci- bis C₁₀-Sulfonyl aufweisen kann und der eines oder mehrere Heteroatome O oder NR⁹ umfassen kann. Die Reste R³ und R⁴ sind bevorzugt gleich oder verschieden und bedeuten jeweils einen Arylrest mit 6 bis 10 Kohlenstoffatomen, der jeweils einen oder mehrere, in der Regel 1 bis etwa 3, gleiche oder verschieden Substituenten, ausgewählt aus der Gruppe der Substituenten C₁- bis C₆-Alkyl, Halogen, NR^{5"}R^{6"}, NHR^{7"}, OR^{8"}, Sulphonyl und NR¹⁰R¹¹R¹²R¹³, C(O)OR¹⁴, C(O)NR^{14'}R^{14"} aufweisen kann.

Erfindungsgemäß besonders bevorzugte Verfahrenprodukte der allgemeinen Formel (I) sind solche, bei denen die Reste R¹ und R² gemeinsam einen Cyclohexylring bilden und die Reste R³ und R⁴ jeweils wie vorstehend beschrieben substituiertes oder unsubstituiertes Phenyl bedeuten. Ebenfalls erfindungsgemäß bevorzugt sind Verfahrensprodukte der Formel (I), bei denen die Reste R¹ und R² jeweils Methyl und die Reste R³ und R⁴ jeweils wie vorstehend beschrieben substituiertes oder unsubstituiertes Phenyl bedeuten.

Die folgenden Verbindungen der Formeln (1) bis (7) seien beispielhaft als erfindungsgemäß bevorzugte Verfahrensprodukte angegeben:

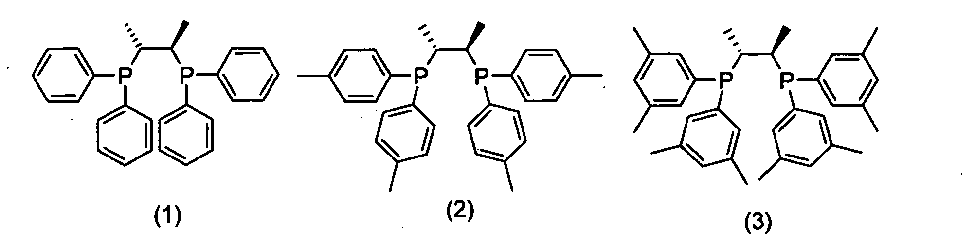

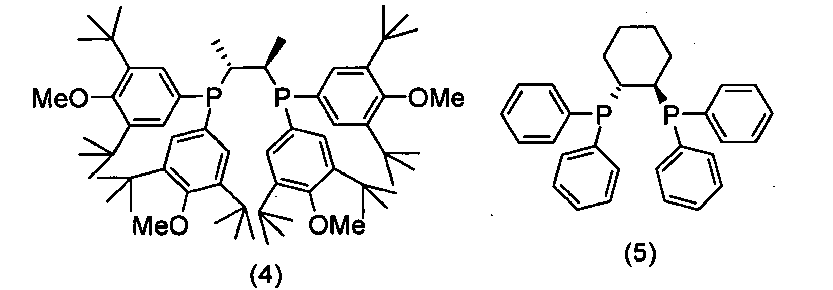

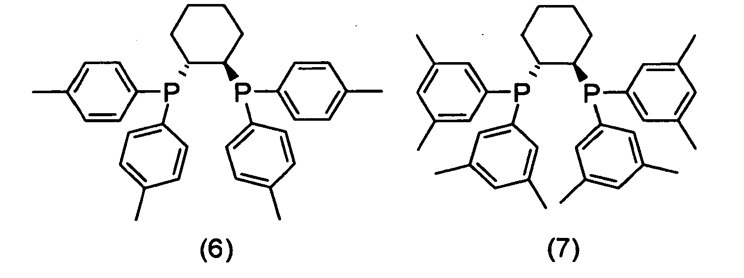

Die genannten Verfahrensprodukte der allgemeinen Formel (I) können wahlweise, in Abhängigkeit der Ausgestaltung von Schritt c) des erfindungsgemäßen Verfahrens, in Form ihrer beiden Enantiomere erfindungsgemäß hergestellt werden.

Das erfindungsgemäße Verfahren umfasst die Reaktionsschritte a) bis d), die im folgenden näher erläutert werden:
Gemäß Schritt a) des erfindungsgemäßen Verfahrens setzt man eine Diol der allgemeinen Formel (II) als Ausgangsverbindung 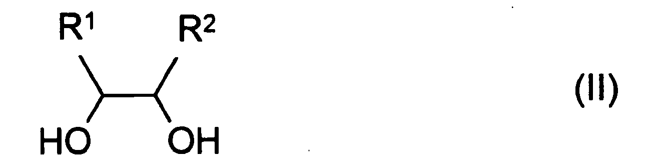 wobei die Reste R¹ und R² die für das jeweils gewünschte Verfahrensprodukt der allgemeinen Formel (I) angegebene Bedeutung besitzt, zu einer Verbindung der Formel (III) 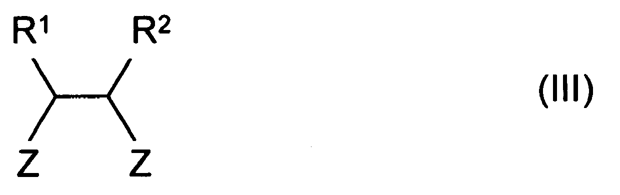
um, wobei die Reste R¹ und R² in Formel (III) die gleiche Bedeutung besitzen wie in Formel (II), und die Reste Z jeweils für eine Abgangsgruppe stehen oder gemeinsam für ein Strukturfragment ausgewählt aus der Gruppe der verbrückenden Strukturfragmente -O-S(O)₂-O-, -O-P(O)(OR¹⁵)₂-O-, -O-C(O)-O- und -O-C(O)-C(O)-O- stehen, wobei R¹⁵ für C₁- bis C₁₂ Alkyl, C₇- bis C₁₇-Aralkyl oder C₆- bis C₁₂-Aryl stehen.

Unter dem Begriff Abgangangsgruppe sind im Rahmen der vorliegenden Erfindung solche Strukturelemente zu verstehen, die sich durch Angriff von bzw. die Umsetzung mit Nucleophilen substituieren lassen.

Als Ausgangsverbindungen zur Herstellung der Verbindungen der Formel (III) eignen sich 1,2-Diole der Formel (II), die in Form von Gemischen der möglichen Diastereomere, gewünschtenfalls aber auch in Form stereochemisch einheitlicher Verbindungen eingesetzt werden können. Als bevorzugte Ausgangsverbindungen der Formel (11) seien beispielhaft genannt: 2,3-Butandiol, 1,2-Cyclohexandiol, 2,3-Dihydroxydecalin, 3,4-Dihydroxypyran, 3,4-Dihydroxytetrahydrofuran, N-Methyl-3,4-dihydroxypyrolidin, N-Benzyl-3,4-dihydroxypyrolidin, N-Acetyl-3,4-dihydroxypyrolidin, N-Pivaloyl-3,4-dihydroxypyrolidin oder 3,4-Dihydroxythiophen.

Die beiden Hydroxygruppen der jeweils gewählten Ausgangsverbindung der Formel (II) werden gemäß Schritt a) der vorliegenden in geeignete Abgangsgruppen umgewandelt. Als geeignete Abgangsgruppen seien beispielhaft genannt: Halogenid, bevorzugt Chlorid, Bromid oder Iodid, Mesylat, Tosylat, Triflat, Nonaflat, Acetat,Trifluoracetat und Benzoat. Erfindungsgemäß insbesondere bevorzugte Abgangsgruppen gemäß Schritt a) sind Chlor, Brom, Iod, Tosylat, Mesylat oder Trifluoracetat. Verfahren zur Überführung der gewählten Ausgangsverbindungen der Formel (II) in die Verbindungen der Formel (III) sind dem Fachmann an sich bekannt und beispielsweise in J. Am. Chem. Soc. 1977, 99, 6262-6267 oder Synthesis 1992, 951 beschrieben. Daneben kann auch eine Aktivierung der Hydroxylgruppen zur Substitution in situ z.B. durch Komplexierung mit einer Lewis-Säure oder Anwendung von Bedingungen, wie sie von Mitsunobu, O. in Synthesis 1981, 1 beschrieben, vorgenommen werden.

Die beiden Strukturelemente Z in Formel (III) können im Rahmen einer weiteren Ausführungsform gemeinsam für ein Strukturfragment ausgewählt aus der Gruppe der Strukturfragmente -0-S(O)₂-O-, -O-P(O)(OR¹⁵)₂-O-, -O-C(O)-O- und -O-C(O)-C(O)-O-stehen, wobei R¹⁵ für C₁- bis C₁₂-Alkyl, C₇- bis C₁₇-Aralkyl oder C₆ bis C₁₂-Aryl stehen. Die Verbindungen der Formel (III) stellen dann cyclische Sulfate, Phosphate, Carbonate oder Oxalate dar, wobei die genannten Phosphate mit geeigneten, wie vorstehend bezeichneten Gruppen, bevorzugt mit Methyl, Phenyl oder Benzyl verestert sind. Im Rahmen einer bevorzugten Ausführungsform des erfindungsgemäßen Verfahrens überführt man ein Diol der Formel (II) in ein cyclisches Sulfat der Formel (VII).

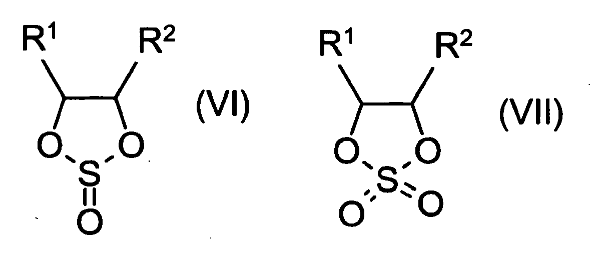

Die erfolgt zweckmäßig durch Sulphonierung des eingesetzte Diols der Formel (II), beispielsweise durch Einwirkung von Thionylchlorid zum cyclischen Sulfit der Formel (VI) und anschließender Oxidation durch Einwirkung geeigneter Oxidationsmittel wie beispielsweise KMnO₄ oder TPAP (Tetrapropylammoniumperruthenat).

Die so gemäß Schritt a) zugänglichen Zwischenprodukte der allgemeinenen Formel (III) können in üblicher Weise isoliert und bei Bedarf weiter aufgereinigt werden. Sie dienen als Ausgangsverbindungen für Schritt b) des erfindungsgemäßen Verfahrens.

Gemäß Schritt b) des erfindungsgemäßen Verfahrens setzt man die in Schritt a) erhaltenen Verbindung der Formel (III) mit einem Phosphit der Formel (IV) 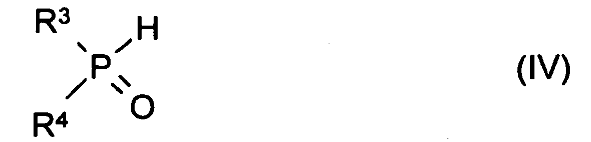 um, wobei die Reste R³ und R⁴ die für das Verfahrensprodukt der Formel (I) gewünschten Bedeutungen besitzen. Die Umsetzung wird in Gegenwart einer Base durchgeführt, die befähigt ist, das eingesetzte Phosphit der Formel (IV) zu deprotonieren. Man erhält dadurch gemäß Schritt b) des Verfahrens ein racemisches, 1,2-transkonfiguriertes Diphosphit der Formel (V) 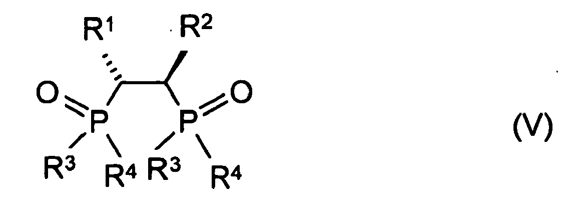 wobei die Reste R¹ bis R⁴ die für das Verfahrensprodukt der Formel (I) gewünschte und den gemäß Schritt a) durchlaufenen Verbindungen der Formeln (II) bzw. (III) entsprechenden Bedeutungen besitzen.

Gemäß Schritt b) werden die Abgangsgruppen bzw. die cyclische Abgangsgruppe Z durch das aus dem eingesetzten Phosphit der Formel (IV) und der eingesetzten Base durch Deprotonierung gebildeten Nucleophil substituiert. Die Reaktion erfolgt vorzugsweise in einem dipolar-aprotischen Lösungsmittel wie z.B. Dimethylsulphoxid, Dimethylformamid, Dimethylacetamid, N-Methylpyrolidinon, Sulfolan oder weiteren, dem Fachmann geeignet erscheinenden Lösungsmitteln in Gegenwart von Wasser. Als geeignete Basen seien insbesondere zumindest teilweise wasserlösliche Basen genannt wie Alkalimetallhydroxide (z.B. Natrium- oder Kaliumhydroxid), Erdalkalimetallhydroxide (z.B. Calcium- oder Magnesiumhydroxid), Alkalimetallalkoholate (z.B. Natrium- oder Kaliummethanolat oder-ethanolat) und Erdalkalimetallalkoholate (z.B. Calcium- oder Magnesiumethanolat). Die genannten Basen werden üblicherweise in molaren Mengen von etwa 1 bis etwa 10 Äquivalenten, bezogen auf das zu deprotonierende Phosphit der Formel (IV) eingesetzt, bevorzugt in Form wässriger Lösungen eingesetzt. Die Umsetzung wird zweckmäßig bei Temperaturen oberhalb von etwa 0°C durchgeführt. Weitere substrat- bzw. reagenzspezifische Reaktionsbedingungen lassen sich durch Routineversuche ermitteln.

Man erhält auf diese Weise in hohen Ausbeuten und Selektivitäten die gewünschten 1,2 trans-konfigurierten Diphosphite der Formel (V), die sich durch dem Fachmann an sich bekannte Methoden isolieren und, beispielweise durch Kristallisation weiter aufreinigen lassen. Es hat sich gezeigt, dass die gemäß Schritt b) der vorliegenden Erfindung hergestellten Diphosphite der allgemeinen Formel (V) oft eine höhere Diastereomerenreinheit aufweisen als die entsprechend eingesetzten Vorläuferverbindungen der Formel (III) bzw. (II), was auf eine der zweifachen Substitutionsreaktion nachgeschaltete Isomerisiereng, möglicherweise durch Einwirkung der eingesetzten Base, rückschließen lässt. Die gemäß Schritt b) hergestellten Diphosphite der Formel (V) fallen demnach in hoher Diastereomerenreinheit in Form racemischer Gemische an. Und werden erfindungsgemäß wie unter Schritt c) beschrieben weiterbehandelt.

Gemäß Schritt c) der vorliegenden Erfindung nimmt man eine Racematspaltung des in Schritt b) erhaltenen racemischen Diphosphits der Formel (V) unter Erhalt eines optisch aktiven Diphosphits der Formel (V*) 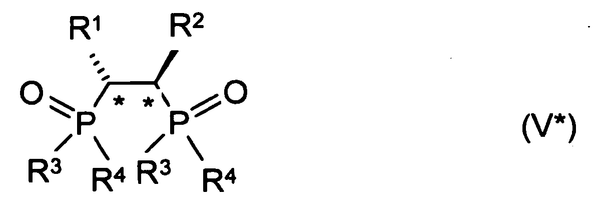 vor, wobei die Reste R¹ bis R⁴ die für das Verfahrensprodukt der Formel (I) gewünschten und den gemäß Schritt a) und b) durchlaufenen Verbindungen der Formeln (II), (III), (IV) und (V) entsprechenden Bedeutungen besitzen, und wobei das Symbol * ein asymmetrisch substituiertes Kohlenstoffatom bezeichnet.

Racematspaltungen von chiralen Diphosphiten sind bekannt und beispielsweise in J. Org. Chem. 1986, 51, 629-635 beschrieben. Vorzugsweise führt man die Racematspaltung des in Schritt b) erhaltenen racemische Diphosphits der Formel (V) durch Addukt-Bildung mit geeigneten chiralen Hilfsreagenzien wie z.B. chiralen Säuren wie etwa chiralen Carbon- oder Sulphonsäuren in optisch aktiver Form durch. Hierfür geeignete chirale Säuren sind beispielsweise (+)- oder (-)-Dibenzoyltartrat oder (+)- oder (-)-Camphersulfonsäure. Zweckmäßigerweise führt man gemäß Schritt c) des erfindungsgemäßen Verfahrens eine Kristallisation der in Schritt b) erhaltenen Racemate der Formel (V) in Gegenwart der genannten enantiomerenreinen Hilfsreagenzien gegebenenfalls bei verminderten Temperaturen durch. Die dabei erhaltenen diastereomeren Addukte können dann in dem Fachmann bekannter Weise isoliert werden. Aus den so gewonnenen diastereomeren Addukten erhält man durch Spaltung derselben die freien optisch aktiven Diphosphite der Formel (V*) sowie das eingesetzte chirale Hilfsreagenz, das im Rahmen weiterer Umsetzungen wiederverwendet werden kann.

Die so gemäß Schritt c) des erfindungsgemäßen Verfahrens erhaltenen optisch aktiven Diphosphite der Formel (V*) werden abschließend gemäß Schritt d) zum gewünschten optisch aktiven Bis-phosphinylalkan der Formel (I) reduziert. Ein gegebenenfalls ungewünschtes optisches Isomer kann z.B. in Gegenwart einer Base racemisiert werden und wieder in Schritt c) des Verfahrens eingesetzt werden. Reduktionen von Diphosphiten zu Bis-phosphinylalkanen sind bekannt und beispielsweise von Matteoli et al. in Tetrahedron: Asymmetry 1997, 8, 1403-1409 unter Verwendung von Trichlorsilan in siedendem Xylen beschrieben. Als geeignete Reduktionsverfahren sind solche zu betrachten, bei denen es nicht oder nur in geringem Ausmaß zur Racemisierung des jeweils eingesetzten chiralen Diphosphits der Formel (V*) bzw. dem dabei gebildeten Bis-phosphinylalkan der Formel (I) kommt. Als weitere geeignete, und damit im Rahmen von Schritt d) des erfindungsgemäßen Verfahrens vorteilhaft einsetzbare Reduktionsmittel seien beispielhaft genannt: Lithiumaluminiumhydrid, Alan, Triethoxysilan oder Phenylsilan.

Das erfindungsgemäße Verfahren eröffnet einen wirtschaftlichen Zugang zu optisch aktiven chiralen Bis-phosphinylalkanen der Formel (I), der sich durch einfache Reaktionsführung in allen vier Stufen und die Verwendung wohlfeiler Ausgangsstoffe (diese können in Form racemischer Diastereomerengemische eingesetzt werden) und Reagenzien. Da verfahrenstechnisch problematische Reaktionsbedingungen wie beispielsweise eine hohe Stufenzahl, tiefe Temperaturen oder aggressive Reagenzien vermieden werden, eignet sich das erfindungsgemäße Verfahren in besonderem Maße zur Anwendung im technischen Maßstab.

Die durch das erfindungsgemäße Verfahren zugänglichen optisch aktiven chiralen Bisphosphinylalkane der Formel (I) eignen sich zur Anwendung als Liganden für metallorganische, speziell übergangsmetallorganische Katalysatoren für die asymmetrische Synthese. Speziell eignen sie sich zur Herstellung von chiralen Übergangsmetallkatalysatoren für asymmetrische Hydrierungen, Hydroformylierungen, Hydroborierungen, und allylische Alkylierungen wie beispielsweise beschrieben in Catalytic Asymmetric Synthesis, Wiley-VCH 2000, I. Ojima, (Hrsg.).

Die vorliegende Erfindung betrifft demzufolge auch ein Verfahren zur Herstellung von optisch aktiven Übergangsmetallkatalysatoren durch Herstellung eines optisch aktiven chiralen Bis-phosphinylalkans der Formel (I) gemäß dem vorstehend beschriebenen Verfahren und anschließendes Inkontaktbringen des so hergestellten Bis-phosphinylalkans der Formel (I) mit einer geeigneten Übergangsmetallverbindung. Dazu werden geeignete Übergangsmetalle, beispielsweise Fe, Ru, Os, Co, Rh, Ir, Ni, Pd, Pt, Cu, Ag oder Au vorteilhaft in Form von Verbindungen, die im gewählten Reaktionsmedium löslich sind, wie beispielsweise Salze oder Komplexverbindungen mit geeigneten Liganden wie z.B. Carbonyl, Acetylacetonat, Hydroxy, Cyclooctadien, Norbornadien, Cycloocten, Methoxy, Benzol, Thymol, Halogenid, wie Chlorid, Bromid oder Iodid, Acetyl oder sonstige aliphatische oder aromatische Carboxylate, mit den erfindungsgemäß hergestellten chiralen Bis-phosphinylalkan der Formel (I) in Kontakt gebracht. Bevorzugte Übergangsmetallverbindungen im Rahmen des erfindungsgemäßen Verfahrens sind beispielsweise Rh (I), Rh(II)- und Rh(III)- sowie Rh(O)-Verbindungen, Ir(I), Ir(II)-, Ir(III), Ir(IV)- sowie Ir(O)-Verbindungen, Ru(II), Ru(III), Ru(IV)-sowie Ru(0)-verbindungen, Pd(II)-, Pd(IV)- sowie Pd(0)-Verbindungen und Pt(II)-, Pt(IV)-sowie Pt(O)-Verbindungen, Cu(I)-, Cu(II), Cu(III)-Verbindungen, Ag(I)- oder Ag(III)-Verbindungen, Au(I)- oder Au(III)-Verbindungen, beispielhaft in Form von: Ru(cod)methallyl₂, Ru(cod)allyl₂, [Ru(benzol)Cl]₂, [Ru(thymol)Cl]₂, [Ru(thymol)l]₂,RhCl₃, Rh(OA_{c})₃, [Rh(cod)Cl]₂, Rh(CO)₂acac, [Rh(cod)OH]₂, [Rh(cod)OMe]₂, [Rh(cod)₂]BF₄, [Rh(cod)₂]PF₆, [Rh(cod)₂]OTf, [Rh(cod)₂]SbF₆, [Rh(nbd)Cl]₂, [Rh(nbd)OH]₂, [Rh(nbd)OMe]₂, [Rh(nbd)₂]BF₄, [Rh(nbd)₂]PF₆, [Rh(nbd)₂]OTf, [Rh(nbd)₂]SbF₆ Rh₄(CO)₁₂, Rh₆(CO)₁₆ bzw. Ir₄(CO)₁₂, [Ir(cod)Cl]₂, [Ir(cod)₂]BF₄, [Ir(nbd)Cl]₂, [Ir(nbd)₂]BF₄, Pd(OA_{C})₂, Pd(OC(O)CF)₃, [Pd(allyl)Cl]₂, Pd(dba)₂, Pd₂(dba)₃CHCl₃, PdCl₂, PtCl₂, [Pt(cod)₂]OTf₂. [Pt(cod)₂](BF₄)₂, [Pt(nbd)₂]OTf₂, [Pt(nbd)₂](BF₄)₂ CuOTf, AgOTf, AuCl₃ wobei "acac" für einen Acetylacetonat-, "dba" für Dibenzylidenaceton, "cod" für einen 1,5-Cyclooctadien-Liganden und "nbd" für einen Norbornadien-Liganden und "Tf" für Triflat steht.

Die genannten Übergangsmetallverbindungen können mit den erfindungsgemäß hergestellten optisch aktiven chiralen Bis-phosphinylalkan der Formel (I) in dem Fachmann bekannter Weise in Kontakt gebracht werden, wie beispielsweise in Transition Metals for Organic Synthesis, Wiley-VCH 1998, M. Beller, C. Bolm, (Hrsg) beschrieben. Die so zugänglichen chiralen Übergangsmetallkatalysatoren können isoliert und weiterverwendet oder in situ im Rahmen einer zu katalysierenden Reaktion gebildet werden.

Die genannten und weitere geeignete Übergangsmetallverbindungen und -komplexe sind bekannt und in der Literatur hinreichend beschrieben oder können vom Fachmann analog zu den bereits bekannten Verbindungen hergestellt werden.

Im Rahmen einer besonders bevorzugten Ausführungsform eignet sich das erfindungsgemäße Verfahren zur Herstellung von optisch aktiven Übergangsmetallkatalysatoren zur asymmetrischen Hydrierung von Citral, d.h. von Gemischen aus Geranial und Neral zu optisch aktivem Citronellal. Die vorliegende Erfindung betrifft demgemäß auch ein Verfahren zur Herstellung von optisch aktivem Citronellal, bevorzugt D-Citronellal durch asymmetrische Hydrierung von Citral bzw. Geranial und/oder Neral in Gegenwart eines wie vorstehend beschrieben hergestellten optisch aktiven Übergangsmetallkatalysators. In diesem Sinne bevorzugte chirale Übergangsmetallkatalysatoren sind solche, die durch Inkontaktbringen eines nach dem erfindungsgemäßen Verfahren hergestellten optisch aktiven chiralen Bis-phosphinylalkan der Formeln (1) bis (7), und einem der vorstehend genannte bevorzugten Übergangsmetallverbindungen, insbesondere Rh(CO)₂acac, [Rh(cod)OH]₂, [Rh(cod)OMe]₂, Rh₄(CO)₁₂, Rh₆(CO)₁₆ bzw. Ir₄(CO)₁₂ hergestellt werden kann. Ein im Rahmen dieses Aspekts der vorliegenden Erfindung besonders bevorzugter chiraler Übergangsmetallkatalysator ist R,R-Chiraphos der Formel (1).

Das auf diese Weise zugängliche optisch aktive Citronellal stellt einen wertvollen Aromastoff sowie einen wertvolles Intermediat zur Herstellung höher veredelter Produkte dar. Insbesondere eignet sich optisch aktives Citronellal zur Herstellung von optisch aktivem Isopulegol durch intramolekulare Cyclisierung. Durch Hydrierung von optisch aktivem Isopulegol ist die Herstellung von optisch aktivem Menthol möglich.

### Beispiele:

Die folgenden Beispiele dienen der Erläuterung der Erfindung, ohne sie in irgend einer Weise einzuschränken:

Die Diastereomerenreinheit der beschriebenen Reaktionsprodukte wurde durch gaschromatographische Analyse unter folgenden Bedinungen bestimmt: Analytik: Gaschromatographie; Säule: OV-1 Macherey&Nagel, 25 m (Beispiele 1 und 2) bzw. 10 m; Temperaturprogramm: 50°C, 5 min (Beispiel 1) bzw. 2 min; 20°C/min, 300°C).

### Beispiel 1: Herstellung von 4,5-Dimethyl-[1,3,2]dioxathiolan-2,2-dioxid

Zu einer Lösung von of 0,44 mol (40 g) 2,3-Dihydroxybutan (cis/trans-Gemisch) in 200 ml CH₂Cl₂ wurden 0,88 mol (105 g) Thionylchlorid unter Kühlung und kräftigem Rühren über eine Zeitspanne von 3h bei Raumtemperatur getropft. Das entstehende HCl-Gas wurde zur Neutralisation durch eine mit NaOH-Lösung gefüllte Waschschflasche geleitet. Nach Beendigung der Zugabe wurde die Reaktionsmischung 1 h unter Rückfluss gerührt. Das Lösungsmittel wurde im Vakuum entfernt und der Rückstand sofort für die Weiterumsetzung verwendet.

Zu einer Lösung von 0,37 mol (50,7 g) 4,5-Dimethyl-[1,3,2]dioxathiolan-2-oxid in 400 ml CH₂Cl₂ wurden 1300 ml Schwefelsäure (10%) bei 0°C gegeben. Unter starkem Rühren wurden 0,42 mol (66 g) KMnO₄ in kleinen Portionen so zugegeben, dass die Innentemperatur unter 10°C blieb. Die Zugabe war vollständig, wenn die violette Farbe mindestens für 5 Minuten bestehen blieb. Nach Erhitzen für 1 h unter Rückfluss wurde auf Raumtemperatur abgekühlt und die Reaktion durch Zugabe von Natriumbisulfit abgebrochen. Die organische Phase wurde abgetrennt, die wässrige Phase 5 mal mit CH₂Cl₂ extrahiert, die vereinigten organischen Phasen neutral gewaschen, über MgSO₄ getrocknet und im Vakuum eingedampft. Man erhielt 4,5-Dimethyl-[1,3,2]dioxathiolan-2,2-dioxid in Form einer bräunlichen Flüssigkeit (193 mmol, 33 g, 44%) als cis/trans Gemisch (ca. 2:1) aus der sich nach einiger Zeit ein weißer Feststoff abschied.

### Beispiel 2: Herstellung von Hexahydro-benzo[1,3,2]dioxathiol-2,2-dioxid

Zu einer Lösung von 0,16 mol (19 g) 1,2-Dihydroxycyclohexan (cis/trans-Gemisch) in 150 ml CH₂Cl₂ wurden 0,32 mol (38 g) Thionylchlorid unter Kühlung und kräftigem Rühren über eine Zeitspanne von 3h bei Raumtemperatur getropft. Das entstandene HCl-Gas wurde zur Neutralisation durch eine mit NaOH-Lösung gefüllte Waschflasche geleitet. Nach Beendigung der Zugabe wurde die Reaktionsmischung 1 h unter Rückfluss gerührt. Das Lösungsmittel wurde im Vakuum entfernt und der Rückstand (0,15 mol, 24,4 g, 92%) sofort für die weitere Umsetzung verwendet.

Zu einer Lösung von 0,12 mol (19,6 g) des so erhaltenen Sulfits in 100 ml CH₂Cl₂ wurden 400 ml Schwefelsäure (10%) bei 0°C gegeben. Unter starkem Rühren wurden 0,25 mol (40 g) KMnO₄ in kleinen Portionen so zugegeben, dass die Innentemperatur unter 10°C blieb. Die Zugabe war vollständig, wenn die violette Farbe mindestens für 5 Minuten bestehen blieb. Nach Erhitzen für 1 h unter Rückfluss wurde auf Raumtemperatur abgekühlt und die Reaktion durch Zugabe von Natriumbisulfit abgebrochen. Die organische Phase wurde abgetrennt, die wässrige Phase 5 mal mit CH₂Cl₂ extrahiert, die vereinigten organischen Phasen neutral gewaschen, über MgSO₄ getrocknet und im Vakuum eingedampft. Man erhielt Hexahydro-benzo[1,3,2]dioxathiol-2,2-dioxid in Form einer farblosen Flüssigkeit (39 mmol, 6,9 g, 32%) als -2:1 cis/trans-Gemisch.

### Beispiel 3: Herstellung von Verbindung (8)

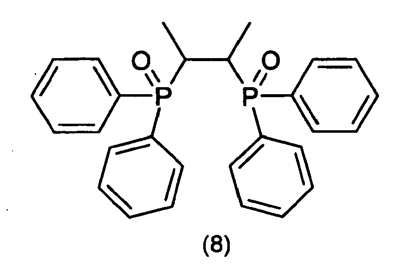

Zu einer Lösung von 121 mmol (24,4 g) Diphenylphosphinoxid in 125 ml DMSO wurden nacheinander unter Rühren und Eiskühlung 30 ml einer 50% Lösung von Kaliumhydroxid in Wasser sowie 41 mmol (6,25 g) des Reaktionsprodukts aus Beispiel 1 gegeben (cis/trans -2:1) und 72 h bei Raumtemperatur gerührt. Die zuerst gebildete Mischung aus cis- und trans-Chiraphosdioxid isomerisierte über die Reaktionszeit fast vollständig zur gewünschten trans-Verbindung. Nach beendeter Reaktion wurde durch Zugabe von 1000 ml ges. KHSO₄-Lösung neutralisiert, mit 300 ml CH₂Cl₂ verdünnt und der resultierende nicht lösliche Feststoff abfiltriert. Die organische Phase wurde abgetrennt und die wässrige Phase 5 mal mit insgesamt 1000 ml CH₂Cl₂ extrahiert. Die vereinigten organischen Phasen wurden im Vakuum bei 50°C vollständig eingeengt, 3 mal mit wenig Pentan gewaschen und im Vakuum getrocknet. Man erhielt 40,6 mmol (18,6 g) leicht gelb gefärbtes Rohprodukt (cis/trans > 95:5). Nach Kristallisation aus Et₂O wurden 28,1 mmol (12,9 g, 68%) der Verbindung (8) in Form eines kristallinen weißen Feststoffes mit einem trans-Gehalt >98% erhalten.

### Beispiel 4: Herstellung von Verbindung (9)

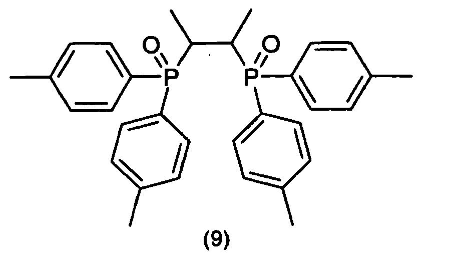

Zu einer Lösung von of 19,5 mmol (4,5 g) Di-paratolylphosphinoxid (J. Gen. Chem. USSR 1992, 62, 1833 -1839) in 25 ml DMSO wurden 5 ml einer 50% KOH-Lösung in Wasser bei 0°C gegeben. Zu der nun orangen Lösung wurden 7,2 mmol (1,1 g) des Reaktionsprodukts aus Beispiel 1 gegeben (cis/trans ∼2:1). Die Reaktionsmischung wurde auf Raumtemperatur erwärmt und weitere 72 h gerührt. Die Reaktion wurde durch Zugabe von 1000 ml ges. KHSO₄-Lösung und 400 ml CH₂Cl₂ sowie Abfiltrieren von unlöslichem Material beendet. Die organische Phase wird abgetrennt und die wässrige Phase wird 5 mal mit CH₂Cl₂ extrahiert. Die vereinigten organischen Phasen weren neutral gewaschen, über MgSO₄ getrocknet und zur trockene eingeengt. Die Verbindung (9) wurde in Form eines gelben Schaums erhalten (5,9 mmol, 3,0 g, 82%, trans-Gehalt >98%).

### Beispiel 5: Herstellung der Verbindung (10)

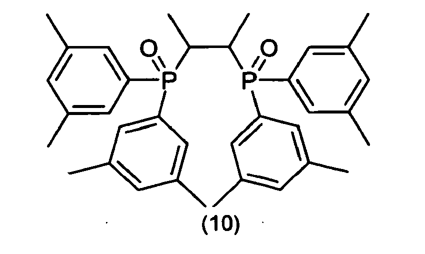

Zu einer Lösung von of 38,7 mmol (10,0 g) Bis-(3,5-dimethylphenyl)-phosphinoxid (org. Lett. 2001, 3, 243 - 246) in 75 ml DMSO wurden 10 ml einer 50% KOH-Lösung in Wasser bei 0°C gegeben. Zu der nun orangen Lösung wurden 14,5 mmol (2,2 g) des Reaktionsprodukts aus Beispiel 1 gegeben (cis/trans ∼2:1). Die Reaktionsmischung wurde auf Raumtemperatur erwärmt und weitere 18 h gerührt. Danach wurde für 14h bei 60°C gerührt. Die Reaktion wurde durch Zugabe von 1000 ml ges. KHSO₄-Lösung und 300 ml CH₂Cl₂ sowie Abfiltrieren von unlöslichem Material beendet. Die organische Phase wurde abgetrennt und die wässrige Phase 5 mal mit CH₂Cl₂ extrahiert. Die vereinigten organischen Phasen wurden neutral gewaschen, über MgSO₄ getrocknet und zur trockene eingeengt. Es wurde die Verbindung (10) in Form eines gelben Feststoffes erhalten (14,4 mmol, 8,2 g, 99%, trans-Gehalt >98%).

### Beispiel 6: Herstellung von Verbindung (11)

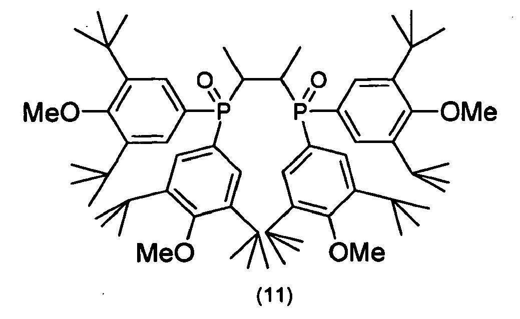

Zu einer warmen Lösung von of 18,5 mmol (9,0 g) Bis-(2,3-di-tert-butyl-4-methoxyphenyl)-phoshinoxid (Synth. Catal. 2003, 345, 180-4)in 450 ml DMSO wurden bei 40°C 5 ml einer 50% KOH-Lösung in Wasser gegeben. Zu der nun orangen Lösung wurden 7,2 mmol (1,1 g) des Reaktionsprodukts aus Beispiel 1 gegeben (cis/trans ∼2:1). Die Reaktionsmischung wurde auf Raumtemperatur abgekühlt und weitere 24 h gerührt. Danach wurde für 4h bei 60°C und abschliessend für 72 h bei Raumtemperatur gerührt. Die Reaktion wurde durch Zugabe von 400 ml ges. KHSO₄-Lösung und 400 ml CH₂Cl₂ sowie Abfiltrieren von unlöslichem Material beendet. Die organische Phase wurde abgetrennt und die wässrige Phase 5 mal mit CH₂Cl₂ extrahiert. Die vereinigten organischen Phasen wurden neutral gewaschen, über MgSO₄ getrocknet und zur trockene eingeengt. Der Rückstand wurde in 80 ml MeOH aufgenommen, filtriert und zur trockene eingeengt. Man erhielt die Verbindung (11) als weissen Feststoff erhalten. Nach säulenchromatographischer Reinigung an Kieselgel (MeOH/EtOAc = 1:5) und Waschen mit Pentan wurden (7,30 mmol, 0,75 g, 11 %, trans-Gehalt >98%).

### Beispiel 7: Herstellung von Verbindung (12)

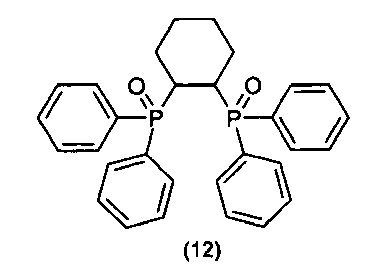

Zu einer Lösung von of 84,2 mmol (17,0 g) Diphenylphosphinoxid in 125 ml DMSO werden 22 ml einer 50% KOH-Lösung in Wasser gegeben. Zu der nun orangen Lösung wurden 28,1 mmol (5,0 g) des Reaktionsprodukts aus Beispiel 2 gegeben (cis/trans ~2:1). Die Reaktionsmischung wurde weitere 96 h gerührt. Die Reaktion wurde durch Zugabe von 500 ml ges. KHSO₄-Lösung und 300 ml CH₂Cl₂ sowie Abfiltrieren von unlöslichem Material beendet. Die organische Phase wurde abgetrennt und die wässrige Phase 5 mal mit CH₂Cl₂ extrahiert. Die vereinigten organischen Phasen wurden neutral gewaschen, über MgSO₄ getrocknet und zur trockene eingeengt. Man erhielt die verbindung (12) als weißen Feststoff (20,2 mmol, 9,81 g, 72%, trans-Gehalt >98%).

### Beispiel 8: Racematspaltung

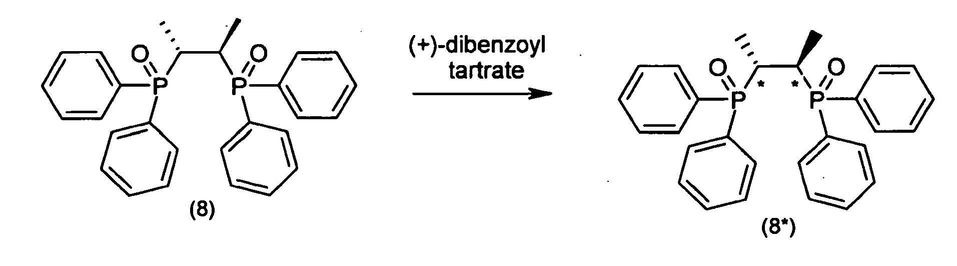

35 mmol (16,1 g) der Verbindung 8 wurden in 100 ml CH₂Cl₂ unter Rückfluss gelöst. Aus einem zweiten Kolben wurde eine siedende Lösung von 35 mmol (12,54 g) (+)-Dibenzoyltartrat ((+)-DBT) in 100 ml EtOAc zu dieser Lösung mittels einer Kanüle gegeben. Nach 2-3 min unter Rückfluss wird die Reaktionsmischung auf Raumtemperatur abgekühlt, die Lösungsmittel im Vakuum entfernt und der Rückstand 3 mal in Pentan aufgenommen und abdestilliert. Der Rückstand wurde in 450 ml EtOAc aufgenommen und zum Rückfluss erwärmt. Das schwerlösliche Addukt aus 8 und (+)DBT wurde abfiltriert. Die klare Lösung wurde auf etwa 200 ml eingeengt und weiteres Addukt von 8 und (+)-DBT wurde abfiltriert. Es wurden insgesamt 7,6 mmol (6,23 g) des Adduktes erhalten. Der Feststoff wurde in 100 ml CH₂Cl₂ gelöst und 10 mal mit 0,1 N NaOH gewaschen. Die organische Phase wurde abgetrennt, über MgSO₄ getrocknet und zur Trockene eingedampft. Es wurde Verbindung (8*) in Form eines weißen Feststoffes erhalten (9,2 mmol, 4,2 g, 52%).

### Beispiel 9: Racematspaltung

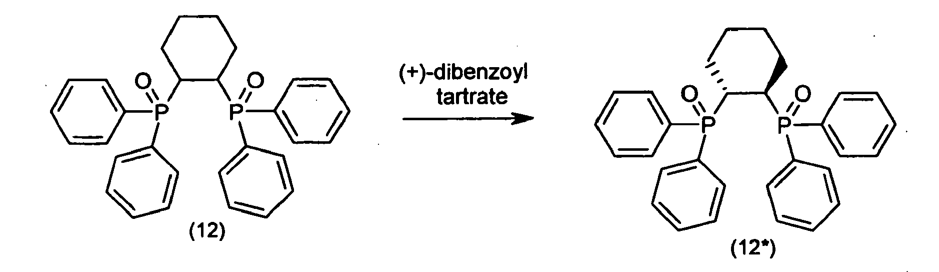

Ausgehend von 10,3 mmol (5,0 g) der Verbidung 12, 10,6 mmol (3,8g) (+)-DBT, 20 ml CH₂Cl₂ und 20 ml EtOAc werden unter gleichem Vorgehen wie in Beispiel 8 1,03 mmol (0,5 g, 20%) der Verbindung 12* erhalten.

### Beispiel 10: Racematspaltung

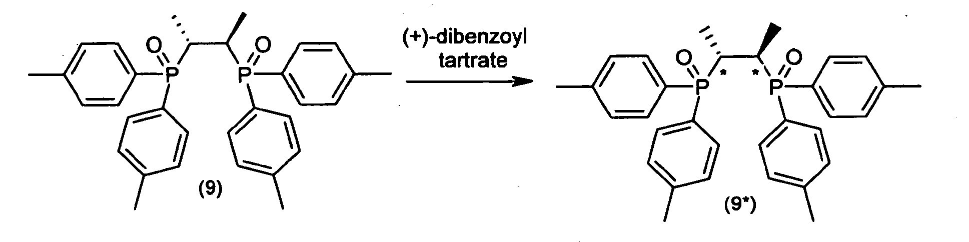

Ausgehend von 56 mmol (28,8 g) der Verbindung (9), 56 mmol (20,1g) (+)-DBT, 160 ml CH₂Cl₂ und 160 ml EtOAc wurden unter analogem Vorgehen wie in Beispiel 8 23,9 mmol (12,3 g, 43%) der Verbindung (9*) nach dreimaligem umkristallisieren erhalten.

### Beispiel 11: Reduktion

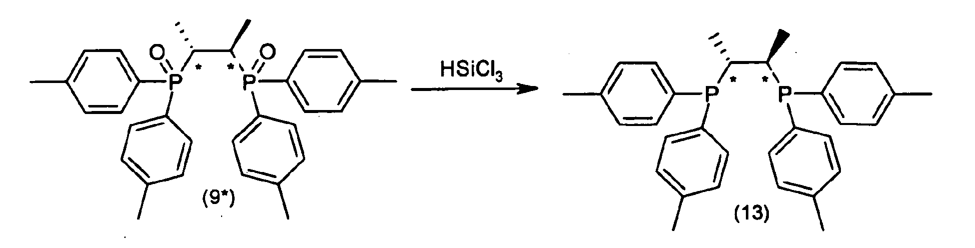

Ausgehend von 22,5 mmol (11,6 g) der Verbindung (9*) wurden in Analogie dem Vorgehen in Matteoli et al. (Tetrahedron:Asymmetry 1997, 8, 1403-1410) nach Umkristallisation aus 100 ml Methanol und anschließendem umkristallisieren aus 200 ml Ethanol 17,5 mmol (9,0 g, 79%) Verbindung (13) erhalten.

## Patentansprüche

1. Verfahren zur Herstellung von optisch aktiven Bis-phosphinylalkanen der Formel (I) 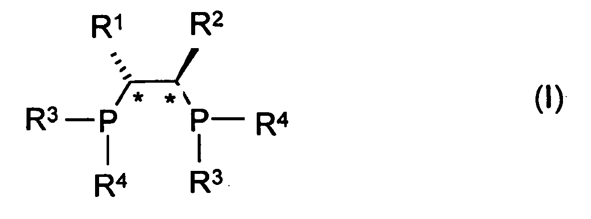 wobei die Reste
R¹ und R² gleich oder verschieden sein können und jeweils einen ge- radkettigen, verzweigten oder cyclischen Alkylrest mit 1 bis 12 Kohlenstoffatomen, der einen oder mehrere gleiche oder verschiedene Substituenten, ausgewählt aus der Gruppe der Substituenten Halogen, C₆- bis C₁₂-Aryl, NR⁵R⁶, NHR⁷ und OR⁸ aufweisen kann, oder einen Arylrest mit 6 bis 12 Koh- lenstoffatomen, der einen oder mehrere gleiche oder ver- schiedene Substituenten, ausgewählt aus der Gruppe der Substituenten C₁- bis C₆-Alkyl, Halogen, C₆- bis C₁₂-Aryl, NR^{5'}R^{6'}, NHR^{7'} und OR^{8'} aufweisen kann, bedeuten oder ge- meinsam einen aliphatischen Cyclus oder Bicyclus mit 4 bis 12 Ringgliedern bilden können, der einen oder mehrere Sub- stituenten, ausgewählt aus der Gruppe der Substituenten Ha- logen, Oxo, C₆- bis C₁₂-Aryl, C₁- bis C₁₀-Acyl und C₁- bis C₁₀- Sulfonyl aufweisen kann und der eines oder mehrere Hetero- atome O oder NR⁹ umfassen kann, und
R³ und R⁴ gleich oder verschieden sein können und jeweils einen ge- radkettigen, verzweigten oder cyclischen Alkylrest mit 1 bis 12 Kohlenstoffatomen oder einen Arylrest mit 6 bis 12 Koh- lenstoffatomen bedeuten, die jeweils einen oder mehrere gleiche oder verschiedene Substituenten, ausgewählt aus der Gruppe der Substituenten C₁- bis C₁₂-Alkyl, Halogen, NR^{5"}R^{6"}, NHR^{7"}, OR^{8"}, Sulphonyl und NR¹⁰R¹¹R¹²R¹³, C(O)OR¹⁴, C(O)NR^{14'}R^{14"} und wobei die Reste
R⁵, R⁶ bis R^{5"}, R^{6"} jeweils unabhängig voneinander C₁- bis C₁₂-Alkyl oder C₆-bis C₁₂-Aryl,
R⁷ bis R^{7"} C₁- bis C₁₀- Acyl oder C₁-C₁₀-Sulfonyl
R⁸ bis R^{8"} C₁- bis C₁₂-Alkyl oder C₆-bis C₁₂-Aryl,
R⁹ C₁- bis C₁₂-Alkyl, C₆-bis C₁₂-Aryl, C₁- bis C₁₀-Acyl oder C₁- bis C₁₀- Sulfonyl,
R¹⁰ bis R¹³ unabhängig voneinander C₁-C₁₂-Alkyl, C₆-C₁₂-Aryl oder C₇- C₁₇ Aralkyl,
R¹⁴, R^{14'} Wasserstoff, C₁-C₁₂-Alkyl, C₆-C₁₂-Aryl oder C₇-C₁₇ Aralkyl,
R^{14"} C₁-C₁₂-Alkyl, C₆-C₁₂-Aryl oder C₇-C₁₇ Aralkyl,
bedeuten können, und wobei
* ein asymmetrisch substituiertes Kohlenstoffatom bezeichnet,
umfassend die folgenden Reaktionsschritte a) bis d):
a) Umsetzung eines Diols der Formel (II) 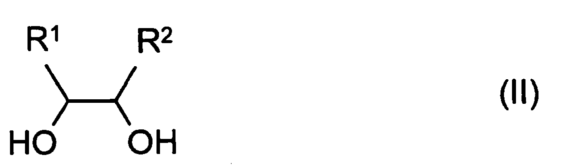 wobei die Reste R¹ und R² die gleiche Bedeutung wie in Formel (I) besitzen,
zu einer Verbindung der Formel (III) 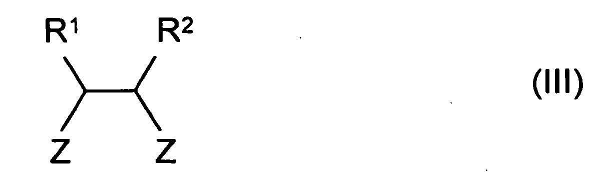 wobei die Reste R¹ und R² die gleiche Bedeutung wie in Formel (I) besitzen,
und die Reste
Z jeweils für eine Abgangsgruppe stehen oder gemeinsam für ein Strukturfragment ausgewählt aus der Gruppe der Strukturfragmente - O-S(O)₂-O-, -O-P(O)(OR¹⁵)₂-O-, -O-C(O)-O- und -O-C(O)-C(O)-O- stehen, wobei R¹⁵ für C₁- bis C₁₂-Alkyl, C₇- bis C₁₇-Aralkyl oder C₆- bis C₁₂-Aryl stehen kann,
b) Umsetzung der in Schritt a) erhaltenen Verbindung der Formel (III) mit einem Phosphit der Formel (IV) 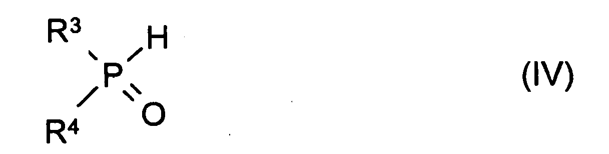 wobei die Reste R³ und R⁴ die gleiche Bedeutung wie in Formel (I) besitzen,
in Gegenwart einer Base, die befähigt ist, das eingesetzte Phosphit der Formel (IV) zu deprotonieren,
zu einem racemischen, 1,2-trans-konfigurierten Diphosphit der Formel (V) 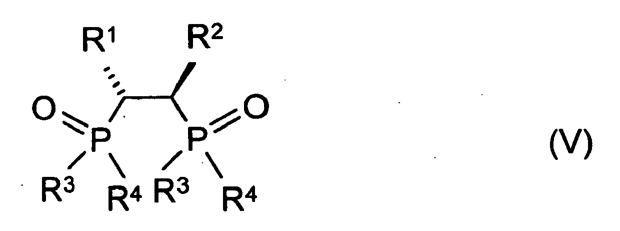 wobei die Reste R¹ bis R⁴ die gleiche Bedeutung wie in Formel (I) besitzen,
c) Racematspaltung des in Schritt b) erhaltenen racemischen Diphosphits der Formel (V) unter Erhalt eines optisch aktiven Diphosphits der Formel (V*) 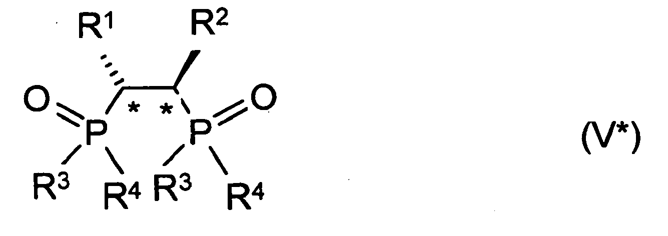 wobei die Reste R¹ bis R⁴ die gleiche Bedeutung wie in Formel (I) besitzen, und
* ein asymmetrisch substituiertes Kohlenstoffatom bezeichnet, und
d) Reduktion der in Schritt c) erhaltenen Verbindung der Formel (V*) zur Verbindung der Formel (I).

2. Verfahren nach Anspruch 1, **dadurch gekennzeichnet, dass** die Reste
R¹ und R² gleich oder verschieden sein können und jeweils einen geradkettigen, verzweigten oder cyclischen Alkylrest mit 1 bis 12 Kohlenstoffatomen bedeuten oder gemeinsam einen aliphatischen Cyclus oder Bicyclus mit 4 bis 12 Ringgliedern bilden können, der einen oder mehrere Substituenten, ausgewählt aus der Gruppe der Substituenten Halo- gen, Oxo, C₆- bis C₁₂-Aryl, C₁- bis C₁₀-Acyl und C₁- bis C₁₀-Sulfonyl aufweisen kann und der eines oder mehrere Heteroatome O oder NR⁹ umfassen kann, und
R³ und R⁴ gleich oder verschieden sein können und jeweils einen Arylrest mit 6 bis 12 Kohlenstoffatomen bedeuten, die jeweils einen oder mehrere gleiche oder verschiedene Substituenten, ausgewählt aus der Gruppe der Substituenten C₁- bis C₆-Alkyl, Halogen, N^{R5"}R^{6"}, NHR^{7'}. OR^{8"}, Carboxy, Sulphonyl und NR¹⁰R¹¹R¹²R¹³ aufweisen kann
bedeuten.

3. Verfahren nach Anspruch 1, **dadurch gekennzeichnet, dass** die Reste
R¹ und R² gleich sind und einen geradkettigen, verzweigten oder cyclischen Al- kylrest mit 1 bis 6 Kohlenstoffatomen bedeuten oder gemeinsam ei- nen aliphatischen Cyclus oder Bicyclus mit 4 bis 12 Ringgliedern bil- den können, der einen oder mehrere Substituenten, ausgewählt aus der Gruppe der Substituenten Halogen, Oxo, C₆- bis C₁₂-Aryl, C₁- bis C₁₀-Acyl und C₁- bis C₁₀-Sulfonyl aufweisen kann und der eines oder mehrere Heteroatome O oder NR⁹ umfassen kann, bilden können und
R³ und R⁴ gleich sind und einen Arylrest mit 6 bis 12 Kohlenstoffatomen bedeu- ten, der einen oder mehrere gleiche oder verschiedene Substituen- ten, ausgewählt aus der Gruppe der Substituenten C₁- bis C₁₂-Alkyl, Halogen, N^{R5"}R^{6"}, NHR^{7'}, OR^{8"}, Carboxy, Sulphonyl und NR¹⁰R¹¹R¹²R¹³ aufweisen kann
bedeuten.

4. Verfahren nach Anspruch 1, **dadurch gekennzeichnet, dass** die Reste R¹ und R² gemeinsam einen Cyclohexylring bilden und die Reste R³ und R⁴ jeweils substituiertes oder unsubstituiertes Phenyl bedeuten.

5. Verfahren nach Anspruch 1, **dadurch gekennzeichnet, dass** die Reste R¹ und R² jeweils Methyl und die Reste R³ und R⁴ jeweils substituiertes oder unsubstituiertes Phenyl bedeuten.

6. Verfahren nach einem der Ansprüche 1 bis 5, **dadurch gekennzeichnet, dass** die Abgangsgruppen Z in Formel (III) ausgewählt sind aus der Gruppe der Abgangsgruppen Halogenid, Mesylat, Tosylat, Triflat, Nonaflat, Acetat,Trifluoracetat und Benzoat.

7. Verfahren nach einem der Ansprüche 1 bis 6, **dadurch gekennzeichnet, dass** die Abgangsgruppen Z in Formel (III) gemeinsam für ein Strukturfragment ausgewählt aus der Gruppe der Strukturfragmente-O-S(O)₂-O-, -O-P(O)(OR¹⁵)₂-O-, - O-C(O)-O- und -O-C(O)-C(O)-O- stehen, wobei R¹⁵ für C₁- bis C₁₂ Alkyl, C₇- bis C₁₇-Aralkyl oder C₆- bis C₁₂-Aryl stehen kann.

8. Verfahren nach einem der Ansprüche 1 bis 7, **dadurch gekennzeichnet, dass** Schritt b) in Gegenwart eines dipolar-aprotischen Lösungsmittels durchgeführt wird.

9. Verfahren nach einem der Ansprüche 1 bis 8, **dadurch gekennzeichnet, dass** die in Schritt b) einzusetzende Base ausgewählt ist aus der Gruppe der Alkalimetallhydroxide, Erdalkalimetallhydroxide, Alkalimetallalkoholate und Erdalkalimetallalkoholate.

10. Verfahren nach einem der Ansprüche 1 bis 9, **dadurch gekennzeichnet, dass** man zur Racematspaltung in Schritt c) eine Kristallisation in Gegenwart eines chiralen Hilfsreagenzes durchführt.

11. Verfahren nach Anspruch 10, **dadurch gekennzeichnet, dass** man als chirales Hilfsreagenz eine chirale Carbon- oder Sulfonsäure in optisch aktiver Form einsetzt.

12. Verfahren zur Herstellung von optisch aktiven Übergangsmetallkatalysatoren durch Herstellung eines optisch aktiven chiralen Bis-phosphinylalkans der Formel (I) gemäß einem der Ansprüche 1 bis 11 und Inkontaktbringen mit einer geeigneten Übergangsmetallverbindung.

13. Verfahren nach Anspruch 12, **dadurch gekennzeichnet, dass** man als Übergangsmetallverbindung eine Verbindung eines Metalls, ausgewählt aus der Gruppe Fe, Ru, Co, Rh, Ir, Ni, Pd, Pt, Cu, Ag und Au einsetzt.

14. Verfahren nach Anspruch 12 oder 13, **dadurch gekennzeichnet, dass** man als chirales Bis-phosphinylalkan (R, R)-Chiraphos einsetzt.

## Claims

1. A process for preparing optically active bisphosphinylalkanes of the formula (I) 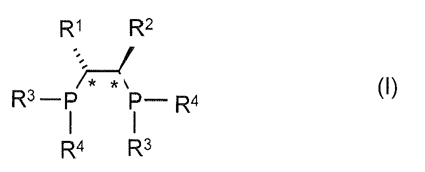 where the radicals
R¹ and R² can be identical or different and are each a straight-chain, branched or cyclic alkyl radical which has from 1 to 12 carbon atoms and may bear one or more identical or different substituents selected from the group consisting of the substituents halogen, C₆-C₁₂-aryl, NR⁵R⁶, NHR⁷ and OR⁸ or an aryl radical which has from 6 to 12 carbon atoms and may bear one or more identical or different substituents selected from the group consisting of the substituents C₁-C₆-alkyl, halogen, C₆-C₁₂-aryl, NR^{5'}R^{6'}, NHR^{7'} and OR^{8'} or together form an aliphatic ring or bicycle which has from 4 to 12 ring members and may bear one or more substituents selected from the group consisting of the substituents halogen, oxo, C₆-C₁₂-aryl, C₁-C₁₀-acyl and C₁-C₁₀-sulfonyl and may comprise one or more heteroatoms O or NR⁹, and
R³ and R⁴ can be identical or different and are each a straight-chain, branched or cyclic alkyl radical having from 1 to 12 carbon atoms or an aryl radical having from 6 to 12 carbon atoms, each of which may bear one or more identical or different substituents selected from the group consisting of the substituents C₁-C₁₂-alkyl, halogen, NR^{5"}R^{6"}, NHR^{7"}, OR^{8"}, sulfonyl and NR¹⁰R¹¹R¹²R¹³, C(O)OR¹⁴, C(O)NR^{14'}R^{14"} and the radicals
R⁵, R⁶ to R^{5"}, R^{6"} are each, independently of one another, C₁-C₁₂-alkyl or C₆-C₁₂-aryl,
R⁷ to R^{7"} are each C₁-C₁₀-acyl or C₁-C₁₀-sulfonyl,
R⁸ to R^{8"} are each C₁-C₁₂-alkyl or C₆-C₁₂-aryl,
R⁹ is C₁-C₁₂-alkyl, C₆-C₁₂-aryl, C₁-C₁₀-acyl or C₁-C₁₀-sulfonyl,
R¹⁰ to R¹³ are each, independently of one another, C₁-C₁₂-alkyl, C₆-C₁₂- aryl or C₇-C₁₇-aralkyl,
R¹⁴, R^{14'} are each hydrogen, C₁-C₁₂-alkyl, C₆-C₁₂-aryl or C₇-C₁₇-aralkyl,
R^{14"} is C₁-C₁₂-alkyl, C₆-C₁₂-aryl or C₇-C₁₇-aralkyl,
and
* denotes an asymmetrically substituted carbon atom,
which comprises the reaction steps a) to d):
a) reaction of a diol of the formula (II) 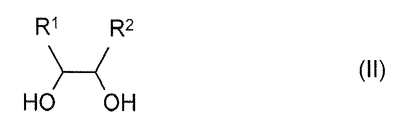 where the radicals R¹ and R² have the same meanings as in the formula (I), to form a compound of the formula (III) 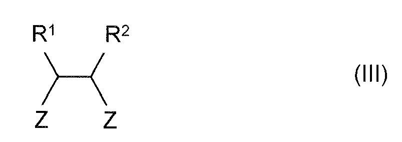 where the radicals R¹ and R² have the same meanings as in the formula (I), and the radicals
Z are each a leaving group or together form a structural fragment
selected from the group consisting of the structural fragments - O-S(O)₂-O-, -O-P(O)(OR¹⁵)₂-C-, -O-C(O)-O- and -O-C(O)-C(O)-O-, where R¹⁵ can be C₁-C₁₂-alkyl, C₇-C₁₇-aralkyl or C₆-C₁₂-aryl,
b) reaction of the compound of the formula (III) obtained in step a) with a phosphite of the formula (IV) 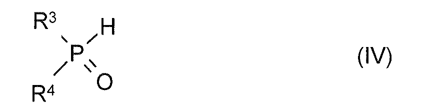 where the radicals R³ and R⁴ have the same meanings as in the formula (I),
in the presence of a base which is capable of deprotonating the phosphite of the formula (IV) used,
to form a racemic 1,2-trans-configured diphosphite of the formula (V) 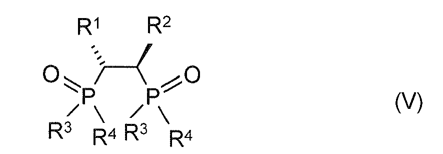 where the radicals R¹ to R⁴ have the same meanings as in the formula (I),
c) resolution of the racemic diphosphite of the formula (V) obtained in step b) to give an optically active diphosphite of the formula (V*) 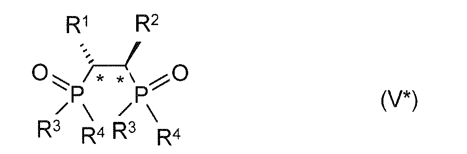 where the radicals R¹ to R⁴ have the same meanings as in the formula (I), and
* denotes an asymmetrically substituted carbon atom, and
d) reduction of the compound of the formula (V*) obtained in step c) to give the compound of the formula (I).

2. The process according to claim 1, wherein the radicals
R¹ and R² can be identical or different and are each a straight-chain, branched or cyclic alkyl radical having from 1 to 12 carbon atoms or together can form an aliphatic ring or bicycle which has from 4 to 12 ring members and may bear one or more substituents selected from the group consisting of the substituents halogen, oxo, C₆-C₁₂-aryl, C₁-C₁₀- acyl and C₁-C₁₀-sulfonyl and may comprise one or more heteroatoms O or NR⁹, and
R³ and R⁴ can be identical or different and are each an aryl radical which has from 6 to 12 carbon atoms and may in each case bear one or more identical or different substituents selected from the group consisting of the substituents C₁-C₆-alkyl, halogen, N^{R5"}R^{6"}, NHR^{7'} OR^{8"}, carboxy, sulfonyl and NR¹⁰R¹¹R¹²R¹³.

3. The process according to claim 1, wherein the radicals
R¹ and R² are identical and are each a straight-chain, branched or cyclic alkyl radical having from 1 to 6 carbon atoms or together form an aliphatic ring or bicycle which has from 4 to 12 ring members and may bear one or more substituents selected from the group consisting of the substituents halogen, oxo, C₆-C₁₂-aryl, C₁-C₁₀-acyl and C₁-C₁₀- sulfonyl and may comprise one or more heteroatoms O or NR⁹, and
R³ and R⁴ are identical and are each an aryl radical which has from 6 to 12 carbon atoms and may bear one or more identical or different substituents selected from the group consisting of the substituents C₁- C₁₂-alkyl, halogen, N^{R5"}R^{6"}, NHR^{7'} OR^{8"}, carboxy, sulfonyl and NR¹⁰R¹¹R¹²R¹³.

4. The process according to claim 1, wherein the radicals R¹ and R² together form a cyclohexyl ring and the radicals R³ and R⁴ are each substituted or unsubstituted phenyl.

5. The process according to claim 1, wherein the radicals R¹ and R² are each methyl and the radicals R³ and R⁴ are each substituted or unsubstituted phenyl.

6. The process according to any of claims 1 to 5, wherein the leaving groups Z in the formula (III) are selected from the group consisting of the leaving groups halide, mesylate, tosylate, triflate, nonaflate, acetate, trifluoroacetate and benzoate.

7. The process according to any of claims 1 to 6, wherein the leaving groups Z in the formula (III) together form a structural fragment selected from the group consisting of the structural fragments -O-S(O)₂-O-, -O-P(O)(OR¹⁵)₂-O-, -O-C(O)-O- and -O-C(O)-C(O)-O-, where R¹⁵ can be C₁-C₁₂-alkyl, C₇-C₁₇-aralkyl or C₆-C₁₂-aryl.

8. The process according to any of claims 1 to 7, wherein step b) is carried out in the presence of a dipolar aprotic solvent.

9. The process according to any of claims 1 to 8, wherein the base used in step b) is selected from the group consisting of alkali metal hydroxides, alkaline earth metal hydroxides, alkali metal alkoxides and alkaline earth metal alkoxides.

10. The process according to any of claims 1 to 9, wherein the resolution of the racemate in step c) is achieved by carrying out a crystallization in the presence of a chiral auxiliary reagent.

11. The process according to claim 10, wherein a chiral carboxylic or sulfonic acid in optically active form is used as chiral auxiliary reagent.

12. A process for preparing optically active transition metal catalysts by preparing an optically active chiral bisphosphinylalkane of the formula (I) according to any of claims 1 to 11 and bringing it into contact with a suitable transition metal compound.

13. The process according to claim 12, wherein a compound of a metal selected from the group consisting of Fe, Ru, Co, Rh, Ir, Ni, Pd, Pt, Cu, Ag and Au is used as transition metal compound.

14. The process according to claim 12 or 13, wherein (R, R)-chiraphos is used as chiral bisphosphinylalkane.

## Revendications

1. Procédé pour la préparation de bis-phosphinylalcanes optiquement actifs de formule (I) 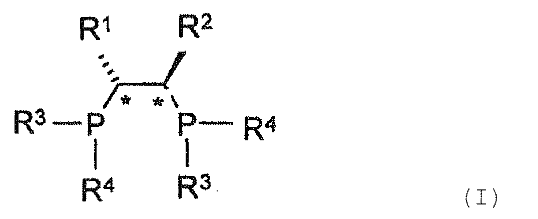 dans laquelle les radicaux
R¹ et R² peuvent être identiques ou différents, et représentent chacun un radical alkyle à chaîne droite, ramifié ou cyclique ayant de 1 à 12 atomes de carbone, qui peut comporter un ou plusieurs substituants identiques ou différents, choisis dans le groupe des substituants halogène, aryle en C₆-C₁₂, NR⁵R⁶, NHR⁷ et OR⁸, ou un radical aryle ayant de 6 à 12 atomes de carbone, qui peut comporter un ou plusieurs substituants identiques ou différents, choisis dans le groupe des substituants alkyle en C₁-C₆, 5' 6' halogène, aryle en C₆-C₁₂, NR^{5'} R^{6'} , NR^{7'} et OR^{8'}, ou peuvent former ensemble un cycle ou bicycle aliphatique ayant de 4 à 12 chaînons formant le(s) cycle(s), qui peut comporter un ou plusieurs substituants, choisis dans le groupe des substituants halogène, oxo, aryle en C₆-C₁₂, acyle en C₁-C₁₀ et sulfonyle en C₁-C₁₀, et qui peut comprendre un ou plusieurs hétéroatomes 0 ou NR⁹, et
R³ et R⁴ peuvent être identiques ou différents et représentent chacun un radical alkyle à chaîne droite, ramifié ou cyclique ayant de 1 à 12 atomes de carbone ou un radical aryle ayant de 6 à 12 atomes de carbone, qui peuvent comporter chacun un ou plusieurs substituants identiques ou différents, choisis dans le groupe des substituants alkyle en C₁-C₁₂, halogène, NR^{5"} R^{6"}, NHR^{7"}, OR , sulfonyle et NR¹⁰R¹¹R¹²R¹³, C(O)OR¹⁴, C(O)NR^{14'} R^{14"} et les radicaux
R⁵, R⁶ à R^{5"}, R^{6"} pouvant représenter chacun, indépendamment les uns des autres, un groupe alkyle en C₁-C₁₂ ou aryle en C₆-C₁₂,
R⁷ à R^{7"} pouvant représenter un groupe acyle en C₁-C₁₀ ou sulfonyle en C₁-C₁₀
R⁸ à R^{8"} pouvant représenter un groupe alkyle en C₁-C₁₂ ou aryle en C₆-C₁₂,
R⁹ pouvant représenter un groupe alkyle en C₁-C₁₂, aryle en C₆-C₁₂, acyle en C₁-C₁₀ ou sulfonyle en C₁-C₁₀,
R¹⁰ à R¹³ pouvant représenter, indépendamment les uns des autres, un groupe alkyle en C₁-C₁₂, aryle en C₆-C₁₂ ou aralkyle en C₇-C₁₇,
R¹⁴,R^{14'} pouvant représenter un atome d'hydrogène, un groupe alkyle en C₁-C₁₂, aryle en C₆-C₁₂ ou aralkyle en C₇-C₁₇,
R^{14''} peut représenter un groupe alkyle en C₁-C₁₂, aryle en C₆-C₁₂ ou aralkyle en C₇-C₁₇,
et
* désigne un atome de carbone à substitution asymétrique,
comprenant les étapes de réaction a) à d) suivantes :
a) conversion d'un diol de formule (II) 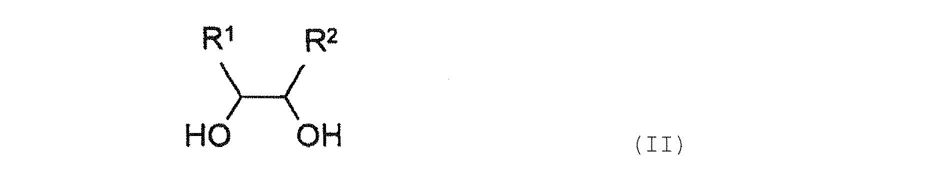 les radicaux R¹ et R² ayant la même signification que dans la formule (I),
en un composé de formule (III) 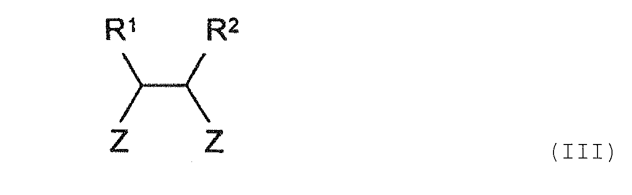 les radicaux R¹ et R² ayant la même signification que dans la formule (I),
et les radicaux
Z pouvant représenter chacun un groupe partant ou représenter ensemble un fragment structural choisi dans le groupe des fragments structuraux -O-S(O)₂-O-, -O-P(O)(OR¹⁵)₂-O, -O-C(O)-O- et -O-C(O)-C(O)-O-, R¹⁵ représentant un groupe alkyle en C₁-C₁₂, aralkyle en C₇-C₁₇ou aryle en C₆-C₁₂,
b) mise en réaction du composé de formule (III) obtenu dans l'étape a) avec un phosphite de formule (IV) 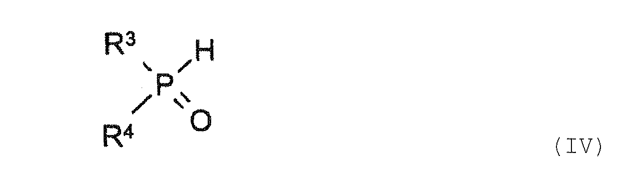 dans laquelle les radicaux R³ et R⁴ ont la même signification que dans la formule (I),
en présence d'une base qui est apte à déprotoner le phosphite de formule (IV) utilisé,
pour l'obtention d'un diphosphite racémique à configuration 1,2-trans de formule (V) 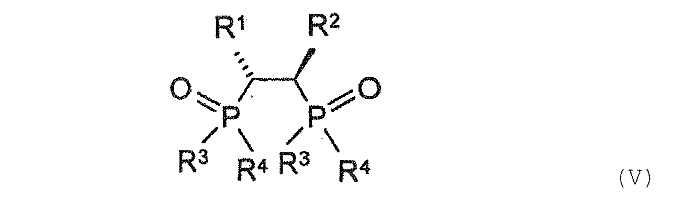 dans laquelle les radicaux R¹ à R⁴ ont la même signification que dans la formule (I),
c) dédoublement de racémate du diphosphite racémique de formule (V) obtenu dans l'étape b), avec obtention d'un diphosphite optiquement actif de formule (V*) 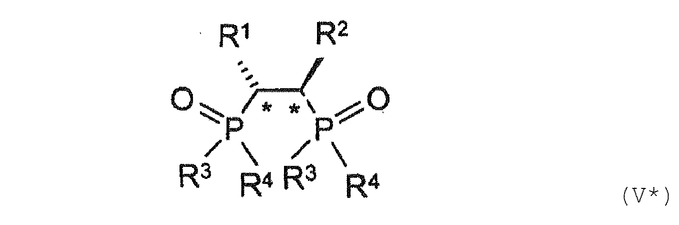 dans laquelle les radicaux R¹ à R⁴ ont la même signification que dans la formule (I),
et
* désigne un atome de carbone à substitution asymétrique, et
d) réduction du composé de formule (V*) obtenu dans l'étape c), en le composé de formule (I).

2. Procédé selon la revendication 1, **caractérisé en ce que** les radicaux
R¹ et R² peuvent être identiques ou différents, et représentent chacun un radical alkyle à chaîne droite, ramifié ou cyclique ayant de 1 à 12 atomes de carbone, ou peuvent former ensemble un cycle ou bicycle aliphatique ayant de 4 à 12 chaînons formant le(s) cycle(s), qui peut comporter un ou plusieurs substituants, choisis dans le groupe des substituants halogène, oxo, aryle en C₆-C₁₂, acyle en C₁-C₁₀ et sulfonyle en C₁-C₁₀ et qui peut comprendre un ou plusieurs hétéroatomes O ou NR⁹, et
R³ et R⁴ peuvent être identiques ou différents et représentent chacun un radical aryle ayant de 6 à 12 atomes de carbone, qui peut comporter chaque fois un ou plusieurs substituants identiques ou différents, choisis dans le groupe des substituants alkyle en C₁-C₆, halogène, NR^{5"} R^{6"},NHR⁷, OR^{8"}, carboxy, sulfonyle et NR¹⁰R¹¹R¹²R¹³.

3. Procédé selon la revendication 1, **caractérisé en ce que** les radicaux
R¹et R² sont identiques ou différents, et représentent un radical alkyle à chaîne droite, ramifié ou cyclique ayant de 1 à 6 atomes de carbone, ou peuvent former ensemble un cycle ou bicycle aliphatique ayant de 4 à 12 chaînons formant le(s) cycle(s), qui peut comporter un ou plusieurs substituants, choisis dans le groupe des substituants halogène, oxo, aryle en C₆-C₁₂. acyle en C₁-C₁₀et sulfonyle en C₁-C₁₀ et qui peut comprendre un ou plusieurs hétéroatomes O ou NR⁹, et
R³ et R⁴ sont identiques ou différents et représentent un radical aryle ayant de 6 à 12 atomes de carbone, qui peut comporter chaque fois un ou plusieurs substituants identiques ou
différents, choisis dans le groupe des substituants alkyle en C₁-C₁₂, halogène, NR^{5"} R^{6"} , NHR^{7'} , OR^{8"} , carboxy, sulfonyle et NR¹⁰R¹¹R¹²R¹³.

4. Procédé selon la revendication 1, **caractérisé en ce que** les radicaux R¹ à R² forment ensemble un cycle cyclohexyle et les radicaux R³ et R⁴ représentent chacun un groupe phényle substitué ou non substitué.

5. Procédé selon la revendication 1, **caractérisé en ce que** les radicaux R¹ et R² représentent chacun un groupe méthyle et les radicaux R³ et R⁴ représentent chacun un groupe phényle substitué ou non substitué.

6. Procédé selon l'une quelconque des revendications 1 à 5, **caractérisé en ce que** les groupes partants Z dans la formule (III) sont choisis dans l'ensemble des groupes partants halogénure, mésylate, tosylate, triflate, nonaflate, acétate, trifluoroacétate et benzoate.

7. Procédé selon l'une quelconque des revendications 1 à 6, **caractérisé en ce que** les groupes partants Z dans la formule (III) représentent ensemble un fragment structural choisi dans le groupe des fragments structuraux -O-S (O)₂-O-, -O-P (O) (OR¹⁵)₂-O-, O-C(O)-O- et -O-C(O)-C(O)-O-, R¹⁵ représentant un groupe alkyle en C₁-C₁₂, aralkyle en C₇-C₁₇ ou aryle en C₆-C₁₂.

8. Procédé selon l'une quelconque des revendications 1 à 7, **caractérisé en ce que** l'étape b) est effectuée en présence d'un solvant aprotique dipolaire.

9. Procédé selon l'une quelconque des revendications 1 à 8, **caractérisé en ce que** la base utilisée dans l'étape b) est choisie dans le groupe des hydroxydes de métaux alcalins, hydroxydes de métaux alcalino-terreux, alcoolates de métaux alcalins et alcoolates de métaux alcalino-terreux.

10. Procédé selon l'une quelconque des revendications 1 à 9, **caractérisé en ce que** pour le dédoublement de racémate dans l'étape c) on effectue une cristallisation en présence d'un réactif auxiliaire chiral.

11. Procédé selon la revendication 10, **caractérisé en ce qu'**on utilise comme réactif auxiliaire chiral un acide carboxylique ou sulfonique chiral sous forme optiquement active.

12. Procédé pour la préparation de catalyseurs à métaux de transition optiquement actifs, par préparation d'un bis-phosphinylalcane chiral optiquement actif de formule (I) selon l'une quelconque des revendications 1 à 11 et mise en contact avec un composé approprié contenant un métal de transition.

13. Procédé selon la revendication 12, **caractérisé en ce qu'**on utilise comme composé contenant un métal de transition un composé d'un métal choisi dans le groupe constitué par Fe, Ru, Co, Rh, Ir, Ni, Pd, Pt, Cu, Ag et Au.

14. Procédé selon la revendication 12 ou 13, **caractérisé en ce qu'**on utilise come bis-phosphinylalcane chiral le (R,R)-chiraphos.
